# EUROPÄISCHE PATENTSCHRIFT

(11) **EP 1 144 472 B1**
(45) Veröffentlichungstag und Bekanntmachung des Hinweises auf die Patenterteilung: **23.04.2003**
(21) Anmeldenummer: 99963423.1
(22) Anmeldetag: 08.12.1999
(51) Int. Cl.: C08G 18/08, C08G 18/70, C09D 175/04, C09D 5/34

(54) **WÄSSRIGE REAKTIVE SPACHTELMASSEN (II)**
AQUEOUS REACTIVE PUTTIES (II)
MASTICS AQUEUX REACTIFS (II)

(30) Priorität: 21.12.1998 DE 19858818; 21.12.1998 DE 19858817
(43) Veröffentlichungstag der Anmeldung: 17.10.2001
(73) Patentinhaber: Bayer Aktiengesellschaft, 51368 Leverkusen (DE)
(72) Erfinder: BLUM, Harald, D-51375 Leverkusen (DE); CLEMENS, Horst, D-47802 Krefeld (DE); EHLERS, Michael, D-47829 Krefeld (DE); IRLE, Christoph, D-47800 Krefeld (DE); WOLFF, Joachim, D-51519 Odenthal (DE); PROBST, Joachim, D-51375 Leverkusen (DE)
(86) Internationale Anmeldenummer: EP9909625
(87) Internationale Veröffentlichungsnummer: WO00037519

(56) Entgegenhaltungen:
- EP-A- 0 798 299
- DE-A- 19 750 451
- US-A- 5 334 651
- US-A- 5 344 873
- US-A- 5 380 792
- DATABASE WPI Section Ch, Week 199504 Derwent Publications Ltd., London, GB; Class A25, AN 1995-027766 XP002133817 & JP 06 313106 A (MITSUI TOATSU CHEM INC), 8. November 1994 (1994-11-08)

## Beschreibung

Die Erfindung betrifft wässrige reaktive Spachtelmassen, Verfahren zur Herstellung von wässrigen reaktiven Spachtelmassen auf Basis von wässrigen reaktiven 2-Komponenten-Bindemittelkombinationen und die Verwendung solcher Spachtelmassen.

Ungesättigte Polyesterharze als Bindemittel für Spachtelmassen sind seit langem bekannt. Solche Produkte enthalten jedoch größere Mengen reaktive, flüchtige Lösemittel, vorzugsweise Styrol, als copolymerisierbare Monomere. Es hat nicht an Versuchen gefehlt, Bindemittel auf Basis ungesättigter Polyester zu entwickeln, die so niedrige Viskosität besitzen, dass sie die für Spachtelmassen charakteristischen hohen Füllstoffmengen aufnehmen können und in Abwesenheit copolymerisierbarer Monomerer trotz niedriger Molekulargewichte mit Hilfe von Peroxiden zu klebfreien Spachtelmassen gehärtet werden können. Beispielhaft genannt sei hier EP 154 924, in dem Polyester auf Basis ungesättigter Dicarbonsäuren, Diolen und Allylether beansprucht werden, die ohne reaktive, flüchtige Lösemittel zu Spachtelmassen formuliert werden können. Aufgrund der für eine Reihe von Anwendungen zu geringen Reaktivität bzw. zu langsamer Aushärtung und aufgrund des hohen Rohstoffkostenniveaus konnten sich solche und ähnliche Systeme im Markt bisher nicht durchsetzen. Wässrige einkomponentige Spachtelmassen sind ebenfalls bekannt, solche Produkte weisen jedoch für viele Anwendungsbereiche nicht das erforderliche Eigenschaftsniveau auf.

Aus der US-A 5,334,651 sind wasserverdünnbare 2-Komponentenbeschichtungsmittel bekannt, die eine Polyisocyanat- und eine Polyurethanharzkomponente enthalten. Diese Systeme werden als wässrige Anstrich- und Beschichtungssysteme eingesetzt. Nachteilig an den beschriebenen Systemen ist, dass diese nur begrenzte Mengen an Füller aufnehmen, was die Anwendung als Spachtelmassen nicht möglich macht.

Es besteht also nach wie vor die Aufgabe, Rohstoffe bzw. Bindemittelkombinationen für Spachtelmassen zur Verfügung zu stellen, die ohne Einsatz reaktiver, flüchtiger Lösemittel und unter Einsatz der für Spachtelmassen charakteristischen, hohen bis sehr Füllstoffmengen stabil formuliert und in praxisgerechten Zeiten zu qualitativ hochwertigen, auch in sehr dicken Schichten bis in den Zentimeterbereich anwendbaren, Spachtelmassen ausgehärtet werden können. Weitere wichtige Anforderungen an neue Bindemittelkombinationen für Spachtelmassen, sind eine schnelle Schleifbarkeit, eine für eine fachgerechte Verarbeitung unbedingt erforderliche spezielle Spachtelkonsistenz, eine hohe Härte bei gleichzeitig ausreichender Flexibilität, hohes Füllvermögen, eine gute Haftung auf verschiedenen Untergründen, sehr gute Überlackierbarkeit mit unterschiedlichen Lacksystemen und gute Beständigkeitseigenschaften.

Weitere wichtige Forderungen an moderne Spachtelmassen sind ein niedriger Gehalt flüchtiger organischer Substanzen (Umweltverträglichkeit) sowie die Möglichkeit auf Basis geeigneter Bindemittelkombinationen durch Auswahl entsprechender Rohstoffe, Additive, Füllstoffe und Pigmente Spachtelmassen mit langer Verarbeitungszeit und trotzdem guter Reaktivität formulieren zu können.

Überraschenderweise wurde jetzt gefunden, dass wässrige reaktive Spachtelmassen, bestehend aus mindestens einer Polyurethan- bzw. Polyurethan-Polyharnstoff-Dispersion und mindestens einem, freie Isocyanatgruppen enthaltenden Polyisocyanat, in der Lage sind, die oben genannten Anforderungen zu erfüllen. Die erfindungsgemäßen Spachtelmassen enthalten nur geringe Mengen flüchtiger Bestandteile. Es ist möglich, durch geeignete Rohstoffauswahl lichtechte Spachtelmassen herzustellen, die praktisch keine Vergilbung oder Kreidung bzw. Verfärbung zeigen, es ist ebenfalls möglich, Spachtelmassen zu formulieren, die lange Verarbeitungszeit und gute Reaktivität vereinen.

Gegenstand der Erfindung sind wässrige Spachtelmassen, bestehend aus
a) 22 bis 38 Gew.-% mindestens einer Polyurethan-Polyharnstoff-Dispersion,
b) 1 bis 7,5 Gew.-% mindestens eines, freie Isocyanatgruppen enthaltenden Polyisocyanats mit einer Viskosität von 10 bis 10 000 mPas/23 °C und einer Funktionalität von 2,15 bis 5,0,
c) 53 bis 75 Gew.-% mindestens eines Pigment und/oder Füllstoffes,
d) 0 bis 2 Gew.-% Hilfsmittel, Zusatzmittel und/oder Additive,
e) 0 bis 20 Gew.-% weitere, gegebenenfalls in Form wässriger Lösung, Dispersion bzw. Emulsion vorliegende Oligomere bzw. Polymere und
f) 0 bis 10 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:2,1 bis 1:10 beträgt.

Gegenstand der vorliegenden Erfindung sind ebenfalls bevorzugte wässrig reaktive Spachtelmassen, dadurch gekennzeichnet, dass die Komponente a) das Umsetzungsprodukt aus
a1) 35 bis 85 Gew.-% mindestens einer Polyolkomponente,
a2) 5 bis 50 Gew.-% mindestens einer Di- und/oder Polyisocyanatkomponente,
a3) 1,5 bis 10 Gew.-% mindestens einer (potentiell) ionischen Verbindungen mit mindestens einer, gegebenenfalls mindestens teilweise neutralisiert vorliegenden, zur Salzbildung fähigen Gruppe und mindestens einer gegenüber Isocyanatgruppen reaktiven Gruppe und gegebenenfalls einer hydrophilen, nichtionischen Verbindung, bestehend aus Verbindungen mit mindestens einer gegenüber Isocyanatgruppen reaktiven Gruppe und mindestens einer hydrophilen Polyetherkette,
a4) 1 bis 10 Gew.-% mindestens einer von a1) bis a3) verschiedenen mono-, di- und/oder polyfunktionellen niedermolekularen Aufbaukomponente des Molekulargewichtsbereiches 32 bis 450, enthält,
wobei Komponente(n) a3) in solcher Menge eingesetzt werden, daß eine stabile Dispersion entsteht.

Gegenstand der Erfindung ist auch die Verwendung der erfindungsgemäßen wässrigen reaktiven Spachtelmassen für Holz, holzartige Untergründe und/oder Kork.

Gegenstand der Erfindung ist auch die Verwendung der erfindungsgemäßen wässrigen reaktiven Spachtelmassen für metallische Untergründe, Fahrzeugkarosserien und/oder Kunststoffe.

Gegenstand der Erfindung ist auch die Verwendung der erfindungsgemäßen wässrigen reaktiven Spachtelmassen für Marmor, Granit bzw. mineralische Untergründe.

Die Polyurethan- bzw. Polyurethan-Polyharnstoff-Dispersionen können isocyanatreaktive Gruppen enthalten wie z.B. Hydroxyl-, Amino-, Thio-, Epoxy-, Ketimin-, Aldimin-, Anhydrid-, Oxazolidin-, Amid-, Lactam-, sekundäre Aminfunktionen aufweisende Asparaginsäureester-gruppen, Phenol- und Carboxyl bzw. Carboxylat-Gruppen.

Vorzugsweise enthaltene isocyanatreaktive Gruppen sind Hydroxylgruppen und/oder Carboxyl- bzw. Carboxylatgruppen. Es können auch Polyurethan- bzw. Polyurethan-Polyharnstoff-Dispersionen ohne Hydroxylgruppen eingesetzt werden.

Zur Herstellung der in den erfindungsgemäßen wässrigen reaktiven Spachtelmassen enthaltenen Polyurethan- bzw. Polyurethan-Polyharnstoff-Dispersionen geeignete Polyolkomponenten a1) sind z.B. Polyesterpolyole ( z.B. Ullmanns Enzyklopädie der technischen Chemie, 4. Auflage, Band 19, S. 62-65). Geeignete Rohstoffe zur Herstellung dieser Polyesterpolyole sind difunktionelle Alkohole wie Ethylenglykol, 1,2- und 1,3-Propylenglykol, 1,3-, 1,4-, 2,3-Butandiol, 1,6-Hexandiol, Neopentylglykol, Trimethylhexandiol, Triethylenglykol, hydrierte Bisphenole, Trimethylpentandiol, Diethylendiglykol, Dipropylendiglykol, 1,4-Cyclohexandiol, 1,4-Cyclohexandimethanol und difunktionelle Carbonsäuren bzw. deren Anhydride wie Adipinsäure, Phthalsäure(anhydrid), Isophthalsäure, Maleinsäure(anhydrid), Terephtalsäure, Tetrahydrophthalsäure(anhydrid), Hexahydrophthalsäure(anhydrid), Bernsteinsäure(anhydrid), Fumarsäure, Azelainsäure, Dimerfettsäure. Ebenfalls geeignete Polyesterrohstoffe sind Monocarbonsäuren wie Benzoesäure, 2-Ethylhexansäure, Ölsäure, Sojaölfettsäure, Stearinfettsäure, Erdnussölfettsäure, Leinölfettsäure, Nonansäure, Cyclohexanmonocarbonsäure, Isono-nansäure, Sorbinsäure, Konjuenfettsäure, höherfunktionelle Carbonsäuren oder Alkohole wie Trimellithsäure(anhydrid), Butantetracarbonsäure, Trimerfettsäure, Trimethylolpropan, Glycerin, Pentaerythrit, Rizinusöl, Dipentaerythrit und andere nicht namentlich genannte Polyesterrohstoffe.

Ebenfalls geeignete Polyesterrohstoffe sind Sulphonatgruppen enthaltende Mono-, Di- bzw. Tricarbonsäuren bzw. Mono-, Di- bzw. Triole wie z.B. das Natrium- oder Kaliumsalz der Sulphoisophtalsäure. Durch Verwendung solcher Bausteine bei der Polyesterpolyolherstellung ist es möglich, Sulphonatgruppen enthaltende Polyolkomponenten a1) zur Herstellung der Polyurethan- bzw. Polyurethan-Polyharnstoff-Dispersionen a) einzusetzen und so einen Teil oder auch die Gesamtmenge der zur Herstellung einer stabilen Dispersion erforderlichen Hydrophilie über das Polyesterpolyol in die Polyurethan- bzw. Polyurethan-Polyharnstoff-Dispersion einzubauen.

In diesem speziellen Fall ist die für die Hydrophilierung erforderliche Menge hydrophiler Komponenten a3) im Polyesterpolyol a1) teilweise oder ganz mit eingebaut und dadurch in der Polyurethan- bzw. Polyurethan-Polyharnstoff-Dispersion enthalten.

Ebenfalls geeignete Polyolkomponenten a1) sind Polycarbonatdiole die z.B durch Umsetzung von Diphenyl- oder Dimethylcarbonat mit niedermolekularen Di- oder Triolen bzw. epsilon-Caprolacton-modifizierten Di- oder Triolen erhalten werden können.

Ebenfalls geeignet sind Polyesterdiole auf Lactonbasis, wobei es sich um Homo- oder Mischpolymerisate von Lactonen, bevorzugt um endständige Hydroxylgruppen aufweisende Anlagerungsprodukte von Lactonen wie z.B. epsilon-Caprolacton oder gamma-Butyrolacton an difunktionelle Startermoleküle handelt. Geeignete Startermoleküle können die oben genannten Diole, aber auch niedermolekulare Polyester- oder Polyetherdiole sein. Anstelle der Polymerisate von Lactonen können auch die entsprechenden Hydroxycarbonsäuren eingesetzt werden.

Ebenfalls geeignete Polyolkomponenten a1) sind Polyetherpolyole. Sie sind insbesondere durch Polymerisation von Ethylenoxid, Propylenoxid, Tetrahydrofuran, Styroloxid und/oder Epichlorhydrin mit sich selbst, z.B. in Gegenwart von BF3 oder basischen Katalysatoren oder aber durch Anlagerung dieser Verbindungen gegebenenfalls auch im Gemisch oder nacheinander, an Starterkomponenten mit reaktionsfähigen Wasserstoffatomen, wie Alkohole, Amine, Aminoalkohole oder Wasser erhältlich.

Die genannten Polyolkomponenten a1) können auch als Mischungen, gegebenfalls auch zusammen mit anderen Polyolen a1) wie z.B. Polyesteramiden, Polyetherestem, Polyacrylaten, Polyolen auf Epoxidharzbasis, eingesetzt werden.

Die Hydroxylzahl der Polyole a1) liegt bei 5 bis 350, vorzugsweise bei 8 bis 200 mg KOH/g Substanz. Die Molekulargewichte der Polyole a) liegen zwischen 300 und 25000, vorzugsweise zwischen 750 und 3000 g/Mol.

Bevorzugt werden als Polyole a1) Polyesterpolyole, insbesondere auf Basis aromatischer Dicarbonsäuren und/oder Adipinsäure hergestellte Polyesterpolyole und/oder di- bzw. trifunktionelle Polyether auf Propylenoxid- bzw. Propylenoxid-/Ethylenoxidbasis bzw. Mischungen der genannten, gegebenenfalls auch mit anderen Polyolen eingesetzt.

Die Komponente a2) besteht aus mindestens einem organischen Di-, Tri- oder Polyisocyanat des Molekulargewichtes 140 bis 1500, vorzugsweise 168 bis 262. Geeignet sind z.B. Hexamethylendiisocyanat (HDI, Desmodur® H, Bayer AG), Isophorondiisocyanat (IPDI, Desmodur® I, Bayer AG), 4,4'-Diisocyanatodicyclohexylmethan (H12MDI, Desmodur® W, Bayer AG), 1,4-Butandiisocyanat, Hexahydrodiisocyanatotoluol, Hexahydrodiisocyanatoxylol, Nonantriisocyanat, 2,4- oder 2,6- Diisocyanatotoluol (TDI), Xylylendiisocyanat und 4,4'-Diisocyanatodiphenylmethan (MDI) und auch andere nicht namentlich genannte Düsocyanate. Ebenfalls mitverwendet werden können an sich bekannte Polyisocyanate auf Basis der genannten und auch anderer Isocyanate mit Uretdion-, Biuret-, Allophanat-, Isocyanurat-, Iminoxadiazindion- und/oder Urethanstruktureinheiten.

Besonders bevorzugt ist die Verwendung von cycloaliphatischen oder aromatischen difunktionellen Isocyanaten des Molekulargewichtes 168 bis 222, gegebenenfalls in Kombination mit untergeordneten Mengen Hexamethylendiisocyanat, insbesondere von Isophorondiisocyanat, 4,4'-Diisocyanatodicyclohexylmethan, 2,4- oder 2,6-Diisocyanatotoluol und 4,4'-Diisocyanato-diphenylmethan.

Die Komponente a3) besteht aus mindestens einer hydrophilen (potentiell) ionischen Verbindung mit mindestens einer, gegebenenfalls mindestens teilweise neutralisiert vorliegenden, zur Salzbildung fähigen Gruppe und mindestens einer gegenüber Isocyanatgruppen reaktiven Gruppe und gegebenenfalls einer zusätzlichen nichtionischen Verbindung mit mindestens einer gegenüber Isocyanatgruppen reaktiven Gruppe und mindestens einer hydrophilen Polyetherkette.

Bei den ionischen Verbindungen a3) handelt es sich z.B um mindestens eine, vorzugsweise eine oder zwei Hydroxyl- und/oder primäre und/oder sekundäre Aminogruppen aufweisende Carbonsäure, Sulfonsäure und/oder Phosphorsäure oder um deren Salze. Geeignete Säuren sind z.B. Hydroxypivalinsäure, Dimethylolessigsäure, 2,2'-Dimethylolpropionsäure, 2,2'-Dimethylolbuttersäure, Aminobenzoesäure, 2,2'-Dimethylolpentansäure, Additionsprodukte aus Acrylsäure und Diaminen wie z.B. Ethylendiamin oder Isophorondiamin. Geeignet sind auch gegebenenfalls Ethergruppen aufweisende Sulfonatdiole, wie sie z.B. in der US-A 4 108 814 beschrieben werden. Ebenfalls geeignet sind aminofunktionelle Sulphonate mit ein oder zwei reaktiven, d.h. primären bzw. sekundären Aminogruppen.

Die freien Säuregruppen, insbesondere Carboxyl- und Sulfonsäuregruppen stellen die vorstehend genannten "potentiell ionischen bzw. anionischen" Gruppen dar, während es sich bei den durch Neutralisation mit Basen bzw. Säuren erhaltenen salzartigen Gruppen, insbesondere Carboxylatgruppen und Sulphonatgruppen um die vorstehend angesprochenen "ionischen bzw. anionischen" Gruppen handelt.

(Potentiell) anionische Komponente a3) mit zwei oder drei reaktiven primären und/oder sekundären Aminogruppen können auch als Kettenverlängerungskomponente a4) verwendet werden.

In einer speziellen Ausführungsform können (potentiell) anionische Komponenten a3) neben Sulphonat- bzw. Carboxylatgruppen auch freie Carboxylgruppen, oder auch nur freie Carboxylgruppen und/oder Anhydridgruppen enthalten und durch eine Kondensationsreaktion, z.B. über Ester- oder Amidbindungen direkt in die Polyolkomponente a1) eingebaut sein.

Dadurch kann ein Teil oder auch die Gesamtmenge der zur Herstellung stabiler Dispersionen erforderlichen hydrophilen Gruppen aus a3) direkt in a1) eingebaut sein. Dafür geeignete Verbindungen a3), die dann als Rohstoffkomponente in a1) eingebaut sind, sind z.B. das Natrium- oder Kaliumsalz der Sulphoisophthalsäure, Trimellithsäureanhydrid, Tetrahydrophthalsäureanhydrid, Phthalsäureanhydrid, wobei die letztgenannten Anhydride in bekannter Art und Weise durch Umsetzung eines Teils der Hydroxylgruppen der Polyolkomponente a1) mit dem Anhydrid unter Ausbildung von Carboxylgruppen tragenden Halbestern umgesetzt werden, und wobei die Carboxylgruppen vor dem Dispergieren des Polyurethans bzw. des Polyurethan-Polyharnstoffes zumindestens teilweise in Carboxylatgruppen überführt werden.

Nichtionisch hydrophile Verbindungen a3) können gegebenenfalls mitverwendet werden und weisen pro Molekül eine oder zwei gegenüber Isocyanatgruppen reaktionsfähige Gruppen auf, insbesondere Hydroxyl- und/oder primäre oder sekundäre Aminogruppen sowie mindestens eine hydrophile Polyetherkette. Die Polyetherketten dieser Verbindungen bestehen zu 30% bis 100% aus eingebauten Ethylenoxideinheiten, wobei in einer bevorzugten Ausführungsform 40 bis 95% eingebaute Ethylenoxideinheiten neben 5 bis 60 % eingebauten Propylenoxideinheiten vorliegen. Geeignete derartige Komponenten a3) weisen Molekulargewichte von 300 bis 6000 auf und sind z.B. monofunktionelle Polyethylen-/propylenglykolmonoalkylether wie Breox® 350, 550, 750 von BP Chemicals, Polyether LB 25, LB 30, LB 34, LB 40 von Bayer AG, Polyethylen-/propylen-glykole wie Carbowax® 300, 400, 1000, 2000, 6000 von Union Carbide, di- oder monofunktionelle Polyetheramine wie Jeffamine® ED600, ED900, ED4000, M715, M1000, M2070 von Texaco.

Bevorzugt werden nichtionische monofunktionelle Komponenten a3) des Molekulargewichts 1000 bis 2500 mit einem Gehalt an eingebautem Propylenoxid von 10 bis 57 % und einem Gehalt an eingebautem Ethylenoxid von 90 bis 43 % eingesetzt.

Prinzipiell ist es auch möglich, Polyurethan- bzw. Polyurethan-Polyharnstoff-Dispersionen mit kationischen hydrophilen Gruppen, gegebenenfalls zusammen mit nichtionisch hydrophilen Verbindungen herzustellen und in den erfindungsgemäßen Spachtelmassen einzusetzen. Dies ist z.B. dadurch möglich, dass man Verbindungen a3) bei der Herstellung der Polyurethan- bzw. Polyurethan-Polyharnstoff-Dispersionen einsetzt, die zu, nach Neutralisation z.B. mit Säuren, hydrophilen quarternären Aminogruppen führen. Geeignete Verbindungen sind z.B. N-Methylethanolamin, N,N-Dimethylethanolamin, geeignete Neutralisationsmittel sind z.B. Phosphorsäure, Essigsäure, Ameisensäure.

Bei der Komponente a4) handelt es sich um mindestens eine von a1), a2) und a3) verschiedene niedermolekulare Aufbaukomponente des Molekulargewichtsbereiches 62 bis 450 mit einer, zwei oder mehr als zwei gegenüber Isocyanatgruppen reaktiven Gruppen. Diese reaktiven Gruppen sind vorzugsweise Hydroxyl- und/oder primäre Amino- und/oder sekundäre Aminogruppen.

Monofunktionelle bzw. monoamino- und gleichzeitig hydroxyfunktionelle Komponenten a4) können als kettenabbrechende und gegebenenfalls zum Einbau endständiger Hydroxylgruppen geeignete Komponenten a4) eingesetzt werden. Es ist auf diesem Weg auch möglich andere funktionelle Gruppen in das Polyurethan bzw. den Polyurethan-Polyharnstoff einzubauen wie z.B. Alkoxysilangruppen oder ungesättigte copolymerisierbare Gruppen.

Entsprechende geeignete Komponenten a4) sind z.B. Diethanolamin, N-Methylethanolamin, Ethanolamin, Isopropanolamin, Diisopropanolamin, Aminomethylpropanol. Ebenfalls geeignet sind z.B. 3-Aminopropyltriethoxysilan, 3-Aminopropyltrimethoxysilan, 3-Aminopropylmethy-diethoxysilan, 4-Amino-3,3-dimethylbutylmethyldiethoxysilan, 2-Ethylhexanol, Stearylalkohol, Oleylalkohol, Cyclohexanol, Hydroxyethylacrylat, Hydroxypropylacrylat, Hydroxypropylmeth-acrylat, Hydroxyethylmemacrylat, Butandiolmonoacrylsäureester, ethoxyliertes bzw. propoxyliertes Hydroxyethylmethacrylat oder Butandiolmonoacrylat oder Hydroxypropylmethacrylat oder Hydroxypropylacrylat oder Hydroxyethylacrylat.

Monoamino- und gleichzeitig hydroxyfunktionellen Komponenten a4) werden dabei so eingesetzt, dass entweder durch die Stöchiometrie der Reaktionskomponenten und/oder die Reaktionsführung sichergestellt ist, dass nur die Aminogruppe solcher Komponenten a4) mit der Isocyanatkomponente reagiert, und die Hydroxylgruppe(n) für die Vernetzungsreaktion bei Anwendung in den erfindungsgemäßen Spachtelmassen zur Verfügung steht.

Di- und höherfunktionelle Komponenten a4) hönnen z.B. zum Aufbau von Hartsegmenten bzw. zur Einführung von Verzweigungsstellen während oder nach der Prepolymerherstellung oder als kettenverlängernd bzw. kettenverzweigend wirkende Komponenten a4) vor, während oder nach dem Dispergierschritt eingesetzt werden.

Zum Aufbau von Hartsegmenten bzw. zur Einführung von Verzweigungsstellen bei der Prepolymerherstellung werden vorzugsweise Diole bzw. Triole wie z.B. Ethylenglykol, 1,2-, 1,3-Propylenglykol, 1,4-Butandiol, Neopentylglykol, 1,6-Hexandiol, Trimethylpentandiol, Glycerin, Trimethylolpropan, ethoxyliertes- bzw. propoxyliertes Trimethylolpropan oder Glycerin oder Butandiol oder Propylenglykol oder Ethylenglykol oder Butendiol oder Bisphenol A oder Mischungen der genannten und auch anderer hydroxy- und/oder aminofunktioneller Startermoleküle für Ethoxylierungs- bzw. Propoxylierungsreaktionen, das Umsetzungsprodukt aus 2 Mol Propylencarbonat und 1 Mol Hydrazin und/oder Mischungen der genannten, gegebenfalls auch mit weiteren Komponenten a4) eingesetzt.

Nach Herstellung des Prepolymeren kettenverlängernd- bzw. kettenverzweigend eingesetzte Komponenten a4) enthalten vorzugsweise mindestens zwei reaktive primäre bzw. sekundäre Aminogruppen. Geeignete Verbindungen sind z.B. Ethylendiamin, Diethylentriamin, Isophorondiamin, 1,6-Hexamethylendiamin, 4,4-Diaminodicyclohexylmethan, Hydroxyethylethylendiamin, Hydrazin(hydrat), das Umsetzungsprodukt aus Hydrazin und Aceton (Acetonazin), Propylendiamin, Dimethylethylendiamin, Adipinsäuredihydrazid, Sulphonatgruppen enthaltende Diaminkomponenten und/oder Mischungen der genannten, gegebenfalls auch mit weiteren Komponenten a4).

Di- und/oder trifunktionelle (potentiell) anionische Komponenten a3) mit zwei oder drei reaktiven primären und/oder sekundären Aminogruppen, wie z.B. 2-Aminoethylaminoethansulphonat oder das 1:1-Umsetzungsprodukt aus Acrylsäure und Isophorondiamin können auch als Kettenverlängerungskomponente a4) eingesetzt werden. Dies kann in Kombination mit anderen oben genannten Verbindungen a4) geschehen, es kann jedoch auch eine Komponente a3) als alleiniges Kettenverlängerungsreagenz a4) fungieren.

Durch geeignete Auswahl der verschiedenen Komponente a4) können z.B. der Hartsegmentgehalt des Polyurethans bzw. des Polyurethan-Polyharnstoffes, der Molekuargewichtsaufbau durch Kettenverlängerung bzw. Kettenverzweigung und der Gehalt an für spätere Vernetzungsreaktionen zur Verfügung stehenden Gruppen, insbesondere von Hydroxylgruppen innerhalb weiter Grenzen eingestellt werden.

Die Polyurethan- bzw. Polyurethan-Polyharnstoff-Dispersionen können z.B. derart hergestellt werden, dass aus mindestens einem Polyol a1), mindestens einer Isocyanatkomponente a2), gegebenenfalls unter Mitverwendung hydrophiler Komponenten a3) bzw. einer Hartsegmente bildenden Komponente a4) zunächst ein isocyanatfunktionelles Prepolymer hergestellt wird, dann gegebenenfalls ein Teil oder die Gesamtmenge der verbleibenden Isocyanatgruppen mit einer Kettenabbruchskomponente a4) umgesetzt wird, und vor, während oder nach dem Dispergieren gegebenenfalls mit einer hydrophilen Komponente a3) und/oder einer kettenverlängernden Komponente a4) umgesetzt wird und anschließend die gegebenenfalls noch verbleibenden Isocyanatgruppen nach dem Dispergieren mit mindestens einer kettenabbrechen-, kettenverlängernd bzw. -kettenverzweigend wirkenden Komponente a4) zur Reaktion gebracht werden und anschließend das vor, während oder nach der Prepolymerherstellung gegebenenfalls zugesetzte Lösemittel gegebenenfalls destillativ entfernt wird.

Die Umsetzung der Komponenten kann unter Zusatz von Katalysatoren wie z.B. Dibutylzinndilaurat, Zinn-2-octoat, Dibutylzinnoxid oder Diazabicyclononan durchgeführt werden.

Zur Überführung der Säuregruppen in Salzgruppen können z.B. Amine wie Triethylamin, N-Methylmorpholin, Diisopropylamin, Hydroxyamine wie Diethanolamin, Triethanolamin, Diispropanolamin, Aminomethylpropanol, Kalium- oder Natriumhydroxid, Ammoniak und Di- bzw. Polyamine wie Hexamethylendiamin, Diisopropylethylamin, Isophorondiamin, Dimethylethylendiamin, 1,4-Cyclohexandiamin, Trimethylhexandiamin, Dimethylhexandiamin, Jeffamine (Texaco) wie z.B. 3,3'-[1,4-Butandiylbis(oxy)]bis-1-propanamin, 4,4'-Methylen-bis-(2,6-diethylcyclohexanamin), 4,4'- Methylen-bis-(2-methylcyclohexanamin), 4,4'-Methylen-bis-cyclohexanamin eingesetzt werden.

Bevorzugte Neutralisationsmittel sind Ammoniak, N-Methylmorpholin, Triethylamin und Diisopropylethylamin.

Die Neutralisationsgrade liegen im allgemeinen zwischen 30 und 150 %, vorzugsweise bei 50 bis 90%.

In einer bevorzugten Ausführungsform wird die komplette Menge an Neutralisationsmittel bereits vor dem Dispergieren des Prepolymeren bzw. Polymeren in/mit Wasser zugegeben.

Nach dem Dispergieren in/durch Wasser wird solange gerührt, bis sämtliche gegebenenfalls noch vorhandene Isocyanatgruppen abreagiert haben. Ebenfalls möglich ist eine vollständige Umsetzung aller Isocyanatgruppen mit oben genannten Komponenten vor dem Dispergieren in/mit Wasser.

Die zur Herstellung der Dispersion gegebenfalls eingesetzten Lösemittel können teilweise bzw. ganz aus der Dispersion durch Destillation abgetrennt werden. Bevorzugte Lösemittel sind z.B. Aceton, Methylethylketon, N-Methylpyrrolidon.

Gegebenenfalls können den Polymeren vor, während oder nach dem Dispergieren auch Hilfs- und Zusatzmittel, wie Antiabsetzmittel, Entschäumer, Verdicker, Emulgatoren, Katalysatoren, Verlaufshilfsmittel, Haftvermittler, Biozide, Antistatika, Lichtschutzmittel, Gleitmittel, Thermostabilisatoren usw. aber auch spezielle oligomere bzw. polymere Verbindungen mit oder ohne hydrophile Gruppen zugesetzt werden.

Bevorzugte Dispersionen aus dem Bereich der Polyurethan- bzw. Polyurethan-Polyharnstoff-Dispersionen sind Polyurethan-Polyharnstoff-Dispersionen, insbesondere Polyurethan-Polyharnstoff-Dispersionen auf Polyesterpolyol-Basis und auf Basis von mindestens 75 Gew.-% cycloaliphatischer oder aromatischer Isocyanatbausteine in Komponente a2).

Die Polyurethan- bzw. Polyurethan-Polyharnstoff-Dispersionen können auch in modifizierter Form in den erfindungsgemäßen Spachtelmassen eingesetzt werden.

Eine bevorzugte modifizierte Form sind polymerisatmodifizierte Polyurethan- bzw. Polyurethan-Polyharnstoff-Dispersionen. Diese Modifizierung kann beispielsweise derart erfolgen, dass 20 bis 90 Gew.-% Polyurethan- bzw. Polyurethan-Polyharnstoff-Dispersion vorgelegt werden, und unter Verwendung geeigneter, Radikale erzeugender, Initiatoren und gegebenfalls zusätzlicher Emulgatoren Acrylsäureester und/oder Methacrylsäureester und/oder Vinylaromaten und/oder Vinylester und/oder Vinylester und/oder andere copolymerisierbare Substanzen in Mengen von 80 bis 10 Gew.-% bei Temperaturen von 20 bis 95 °C so zudosiert werden, dass höher- vorzugsweise hochmolekulare Polyurethan-Polymerisat-Dispersionen bzw. Polyurethan-Polyharnstoff-Polymerisat-Dispersionen gebildet werden. Solche Dispersionen können z.B. eine Kern-Schale-Morphologie aufweisen, es können Pfropfprodukte entstehen oder auch verschlaufte Polymere gebildet werden.

Es können auch Mischungen verschiedener Polyurethan- bzw. Polyurethan-Polyharnstoff-Dispersionen eingesetzt werden, z.B. derart, dass hydroxyfunktionelle mit nichtfunktionellen oder carboxyfunktionellen Dispersionen oder Dispersionen mit niedriger Glasübergangstemperatur mit solchen mit hoher Glasübergangstemperatur oder Dispersionen mit unterschiedlichen Molekulargewichten kombiniert werden. Dadurch besteht die Möglichkeit, spezielle Anforderungen wie z.B. hohe Härte und ausreichende Elastizität, oder sehr schnelle Schleifbarkeit und hohe Elastizität noch besser zu erfüllen.

Die erfindungsgemäßen Dispersionen weisen mittlere Teilchendurchmesser (bestimmt z.B. durch Laserkorrelationsspektoskopie) von 20 bis 900, vorzugsweise von 50 bis 400 nm auf.

Die erfindungsgemäßen Dispersionen weisen Molekulargewichte von vorzugsweise > 50000 g/Mol, besonders bevorzugt von > 100000 g/Mol auf. Alle angegebenen Molekulargewichte sind Gewichtsmittel. Die Molekulargewichte können z.B. durch Gelpermeationschromatographie ermittelt werden.

Die Feststoffgehalte der Dispersionen betragen bei Viskositäten von 10 bis 150 Sekunden Auslaufzeit (DIN-4-Becher, 23°C) vorzugsweise mindestens 30 %. Die pH-Werte liegen vorzugsweise zwischen 6,0 und 10,5.

Geeignete Polyisocyanate b) sind Polyisocyanate mit freien Isocyanatgruppen auf Basis aliphatischer, cycloaliphatischer, aromatisch-aliphatischer und/oder aromatischer Mono-, Di- und/oder Triisocyanate. Die Polyisocyanate weisen bei 23 °C im allgemeinen eine Viskosität von 10 bis 20 000, vorzugsweise von 10 bis 10 000 mPas auf. Falls erforderlich, können die Polyisocyanate in Abmischung mit geringen Mengen an geeigneten Lösemitteln zum Einsatz gelangen, um die Viskosität auf einen Wert innerhalb des genannten Bereiches abzusenken.

Geeignete monomere Isocyanate zur Herstellung der Polyisocyanate b) sind z.B. 1,6-Hexamethylendiisocyanat (Desmodur® H, Bayer AG), 1,4-Butandiisocyanat, Isophorondiisocyanat (Desmodur® I, Bayer AG), Bis-(4-isocyanatocyclohexyl)methan (Desmodur® W, Bayer AG), 1,4-Bis-isocyanatocyclohexan, 2,4- und/oder 2,6-Toluylendiisocyanat (TDI, Bayer AG) Hexahydro-4- und/oder 2,6-Toluylendiisocyanat Xylylendiisocyanat, m- bzw. p-Tetramethylxylylendiisocyanat, 1,3- bzw. 1,4-Bis-(2-isocyanatoethyl)cyclohexan, Bis-(2-isocyanatophenyl)methan, Bis-(4-isocyanatophenyl)methan, Nonantriisocyanat, 1,5-Diisocyanato-2,2-dimethylpentan, 2,2,4-bzw.2,4,4-Trimethyl-1,6-diisocyantohexan, 1,10-Diisocyanatodecan, Hexahydroxylylendiisocyanat, Tetrametylxylylendiisocyant, 4, (3)-Isocyanatomethylcyclohexylisocyanat, Phenylisocyanat, Stearylisocyanat und andere Isocyanate, wie sie z.B. in "Methoden der organischen Chemie" (Houben-Weyl, Bd 14/2, 4. Auflage, Georg Thieme Verlag, Stuttgart 1963, S. 61-70 beschrieben werden. Es können auch Mischungen der genannten und auch anderer Isocyanate eingesetzt werden. Bevorzugte Diisocyanate sind Hexamethylendiisocyanat, Isophorondiisocyanat, Bis-(4-isocyanatocyclohexyl)methan und/oder 2,4- und/oder 2,6-Toluylendiisocyanat sowie als Triisocyanat Nonantriisocyanat.

Geeignete Polyisocyanate werden aus den genannten oder auch aus anderen Diisocyanaten und/oder Triisocyanaten, gegebenenfalls unter Mitverwendung von Mono- und/oder Triisocyanaten oder unter Mitverwendung von Monoalkoholen, Diolen und/oder Polyolen nach literaturbekannten Methoden hergestellt und weisen z.B. Isocyanurat-, Biuret-, Allophanat-, Iminooxadiazindion-, Carbodiimid-, Uretdion-, Urethan- und/oder Harnstoffstruktureinheiten auf. Vorzugsweise werden Polyisocyanate mit mehr als 65% aliphatischen und/oder cycloaliphatisch gebundenen Isocyanatendgruppen und Isocyanurat, Allophanat-, Iminooxadiazindion- und/oder Urethanstruktureinheiten eingesetzt. Ganz besonders bevorzugte Polyisocyanate enthalten als Isocyanatbausteine, gegebenenfalls neben anderen, in der Regel hydroxyfunktionellen Bausteinen, Hexamethylendiisocyanat, Mischungen von Hexamethylendiisocyanat und Isophorondiisocyanat oder Isophorondiisocyant als Ausgangsmaterial.

Die zur Herstellung der Polyisocyanate verwendeten Diisocyanate können prinzipiell auch direkt als Polyisocyanat b) eingesetzt werden, dies ist jedoch nicht bevorzugt.

Polyisocyanatkomponenten b) können als hydrophobe Polyisocyante, dass heißt als keine hydrophilen, die Dispergierung unterstützenden bzw. ermöglichenden Struktureinheiten enthaltenden Polyisocyanate, eingesetzt werden. In diesem Fall werden bevorzugt Polyisocyanate mit einer Viskositäten < 1500, ganz besonders bevorzugt mit Viskositäten < 500 mPas/23°C eingesetzt. Dadurch ist eine gute Vermischung mit dem Reaktionspartner auch bei geringen Scherkräften sichergestellt. Falls die Eigenviskosität der hydrophoben Polyisocyanate nicht in dem bevorzugten Viskositätsbereich liegt, wird dieses vorzugsweise durch Zusatz geeigneter Verdünnungsmittel eingestellt.

Bevorzugte hydrophobe Polyisocyanatkomponenten b) sind z.B. niedrigviskose Hexamethylendiisocyanattrimerisate wie z.B. Desmodur® VP LS 2025/1 (Bayer AG), niedrigviskose Hexamethylendiisocyanatpolyisocyanate mit Uretdion- und/oder Allophanat- und/oder Trimerisatstruktureinheiten wie z.B. Desmodur® N 3400 (Bayer AG), Desmodur® VP LS 2102 (Bayer AG) und insbesondere Nonantriisocyanat.

Polyisocyanatkomponenten b) können auch als hydrophile Polyisocyanate eingesetzt werden. Eine Hydrophilierung ist z.B. durch Umsetzung der Polyisocyanate mit unterschüssigen Mengen an hydrophilierenden Polyetheralkoholen, z.B. auf Ethylenoxid- oder Ethylenoxid/Propylen-oxidbasis, die ein oder zwei isocyanatreaktiven Gruppen, vorzugsweise Hydroxylgruppen enthalten, möglich. Die Herstellung derartiger hydrophilierter Polyisocyanate ist beispielsweise in der EP-A 540 985 beschrieben.

Ebenfalls möglich ist eine Hydrophilierung mittels der oben beschriebenen Polyether durch Umsetzung unterschüssiger Mengen dieser Polyether unter Verwendung geeigneter Katalysatoren wie z.B. Zink-(II)-2-ethyl-1-hexanoat mit Polyisocyanaten, insbesondere Polyisocyanaten mit Isocyanurat-, Biuret-, Urethan- und/oder Iminooxadiazindionstruktureinheiten unter Ausbildung von hydrophilierenden Allophanatstruktureinheiten ("Allophanathydrophilierung"). Durch diese Allophanathydrophilierung können z.B. zwei dreifach isocyanatfunktionelle Isocyanuratstrukturenheiten mittels eines Polyethermoleküls hydrophiliert werden. Solche Produkte zeichnen sich z.B. dadurch aus, dass aufgrund des speziellen Herstellverfahrens und der speziellen Struktur der hydrophilen Gruppen, eine besonders effektive Hydrophilierung und außerdem eine erhöhte Funktionalität vorliegt.

Es wurde gefunden, dass entsprechende Polyisocyanatkomponenten b) die Herstellung erfindungsgemäßer Spachtelmassen mit besonders hohem Eigenschaftsniveau, insbesondere bezüglich Härte, Schleifbarkeit, Beständigkeitseigenschaften und Haftung ermöglichen. Solche, durch Allophanathydrophilierung modifizierten Polyisocyanate b) werden daher ganz besonders bevorzugt eingesetzt.

Ebenso möglich ist eine Hydrophilierung durch Zusatz externer Emulgatoren ionischer und/oder nichtionischer Art zu den Polyisocyanaten.

Ebenfalls möglich ist die Verwendung intern ionisch hydrophilierter Polyisocyanate, welche z.B. durch Umsetzung von Polyisocyanaten mit Hydroxy- oder Aminogruppen aufweisenden gegebnenfalls neutralisierten Säuren erhalten werden können.

Ebenfalls möglich ist die Verwendung von Polyisocyanaten, die sowohl eine hydrophile, als auch eine hydrophobe Modifizierung, z.B. durch Umsetzung mit langkettigen Monoalkoholen erfahren haben.

Ebenfalls möglich ist die Verwendung von Polyisocyanaten bzw. Polyisocyanatgemischen, die durch verschiedene der genannten und auch anderer Modifizierungen hydrophiliert worden sind.

Falls erforderlich kann auch die Einarbeitung hydrophiler Polyisocyanate zur Herstellung der erfindungsgemäßen Spachtelmassen durch Absenken der Viskosität mittels Zusatz organischer Verdünnungsmittel optimiert werden.

Je nach Anforderungsprofil können sowohl gering hydrophilierte, das heißt mit weniger als 5 Gew.-% hydrophilen Gruppen, als auch normal hydrophilierte, das heißt mit 5 bis 20 Gew.% hydrophilen Gruppen, als auch hochhydrophilierte Polyisocyanate, das heißt mit mehr als 20 Gew.% hydrophilen Gruppen eingesetzt werden.

Es können auch Mischungen verschiedener Polyisocyanate, z.B. Mischungen aus einem hydrophoben und einem hydrophilen Polyisocyanat, oder Mischungen von Polyisocyanaten auf verschiedener Diisocyanatbasis, wie z.B. eine Mischung aus einem cycloaliphatischem Polyisocyanat und einem aliphatischen Polyisocyanat eingesetzt werden.

In einer bevorzugten Ausführungsform werden mit Polyether gering oder normal hydrophilierte Polyisocyanate auf Basis von Hexamethylendiisocyanat oder Isophorondiisocyanat, gegebenenfalls in Abmischung mit niedrigviskosen, hydrophoben Polyisocyanaten auf Basis von Hexamethylendiisocyanat, oder in Abmischung mit Nonantriisocyanat eingesetzt.

Ganz besonders bevorzugt ist die Verwendung von über die Allophanatbildung hydrophilierten Polyisocyanaten auf Basis von Hexamethylendiisocyanat, gegebenenfalls in Abmischung mit niedrigviskosen Hexamethylendiisocyanattrimerisaten wie z.B. Desmodur® VP LS 2025/1 (Bayer AG) oder/und niedrigviskosen Hexamethylendiisocyanatpolyisocyanaten mit Uretdion- und/oder Allophanatstruktureinheiten wie z.B. Desmodur® N 3400 (Bayer AG) oder Desmodur® VP LS 2102 (Bayer AG).

Je Äquivalent an isocyanatreaktiven Gruppen im Polyurethan bzw.Polyurethan-Polyharnstoff a) und in der gegebenenfalls mitverwendeten Komponente e) werden mindestens 0,5 Äquivalente an Polyisocyanat b) eingesetzt. Vorzugsweise werden je Äquivalent Hydroxylgruppen in a) 0,8 bis 2,0, besonders bevorzugt 1 bis 1,4 Äquivalente an Polyisocyanat b) eingesetzt. Für den Fall, das Polyurethane bzw. Polyurethan-Polyharnstoffe ohne Hydroxylgruppen verwendet bzw. mitverwendet werden, wird mindestens soviel Polyisocyanat b) eingesetzt, als ob das Polyurethan- bzw. der Polyurethan-Polyharnstoff ohne Hydroxylgruppen mindestens 1 Gew.- %, vorzugsweise 2 oder mehr Gew.- % Hydroxylgruppen aufweisen würde.

Die Funktionalitäten der Polyisocyanate b) sind prinzipiell frei wählbar, geeignet sind z.B. Funktionalitäten von 1,5 bis 7,5, vorzugsweise von 2,0 bis 6,5 und besonders bevorzugt von 2,15 bis 5.

Geeignete Komponenten c) - Pigmente, Füllstoffe, Extender, farbgebende oder sonstige Zusätze - können z.B. sein:

Talkum, Zinkoxide, Zinkphosphate, Schwerspat, Kaolin, Siliciumoxide, Silicate, Eisenoxide, Chromoxide, Titandioxide, sonstige anorganische oder auch organische Farbpigmente, mikronisierter Talk, Kreide, Calciumcarbonat, Dolomit, Calcit, Aluminiumhydroxid, Bariumsulfat, Aluminiumsilicate, Magnesiumsilikate, Feldspat, Eisenglimmer, Glasfasern, Glaskugeln.

Vorzugsweise als Komponenten c) können enthalten sein: Ein Talkum für gute Schleifbarkeit, ein Talkum für hohe Füllung, Zuschlagextender wie Calciumcarbonat oder Bariumsulfat, ein Korrosionsschutzpigment wie z.B. Zinkphosphat/Zinkoxid für metallische Untergründe und ein farbgebendes anorganisches Pigment wie z.B. Titandioxid.

Die erfindungsgemäßen wässrigen reaktiven Spachtelmassen lassen sich durch fachgerechte Auswahl der eingesetzten Talkumarten und -mengen bezüglich Haftung und Schleifbarkeit innerhalb weiter Grenzen optimieren. Dolomit, Calcit oder Schwerspat geben dem Spachtel ein kompaktes Gefüge, dies ist z.B. bei Feinspachteln sehr wichtig. Schwerspatmehle (möglichst mit niedrigem Eisengehalt) verbessern die Verziehbarkeit der Spachtel. Als farbgebende Pigmente werden vorzugsweise anorganische Pigmente wie z.B. Bayertitan-Rutiltypen, Chromoxid und/oder Bayferrox®-Eisenoxidtypen in geringen Mengen, vorzugsweise weniger als 10 Gew.-%, bezogen auf Gesamtmenge an Komponenten c), eingesetzt.

Komponente(n) c) sind mengenmäßig die Hauptkomponente der erfmdungsgemäßen Spachtel.

Bezogen auf Feststoffgehalte ist das Gewichtsverhältnis von c) zu allen anderen Komponenten 1,3 bis 20:1, vorzugsweise 1,5 bis 15:1 und ganz besonders bevorzugt 2,1 bis 10:1.

Geeignete Komponenten d) - Hilfsmittel, Zusatzmittel, Additive - können z.B. sein: Entschäumer, Verlaufshilfsmittel, Antiabsetzmittel, Katalysator, Entlüftungshilfsmittel, Stabilisatoren zur Verhinderung/Reduzierung von Abbau durch UV-Strahlung bzw. von oxidativem Abbau, Verdicker, Rheologiehilfsmittel, Thixotropierhilfsmittel, Benetzungshilfsmittel, Dispergierhilfsmittel, Konservierungsmittel, Verlaufshilfsmittel, Emulgatoren, Schutzkolloide, Antischaummittel, Korrosionsinhibitor, Antiausschwimmittel, Antihautmittel.

Bevorzugt eingesetzte Komponenten d) sind z.B. Antiabsetzmittel, Verdickungsmittel, Benetzungshilfsmittel, Entschäumer und Thixotropierhilfsmittel

Gegebenenfalls mit zu verwendende Komponenten e) können z.B. sein, 100 %, in gelöster oder in Form von gegebenenfalls wässrigen Dispersionen bzw. Emulsionen vorliegende, oligomere und/oder polymere Produkte wie z.B. Polyurethane, Polyurethan-Polyharnstoffe, Polyharnstoffe, Polymerisate, Acrylatcopolymerisate, Styrol enthaltende Polymere, Polyolefinharze, Polybutadienharze, Polyester, Ungesättigte Polyester, Alkydharze, zur oxidativen Vernetzung befähigte Polymere, Allylether enthaltende Produkte, Cellulose und Cellulosederivate, Melamin-Aldehyd-Harze, Harnstoffharze, Polyepoxide, Carbodiimidstrukturen enthaltend Produkte, Polyamine, Thiolgruppen enthaltende Produkte, Reaktivverdünner mit mindestens zwei isocyanatreaktiven Gruppen wie z.B. flüssige Diole, Triole, Tetraole, Aminoalkohole, Diamine oder Polyamine, insbesondere in Form von in der Reaktivität reduzierten Asparginsäureestern, z.B. erhältlich durch Umsetzung von primären, mindestens difunktionellen Aminen mit Maleinsäuredialkylestern, Produkte mit weichmachender Wirkung wie z.B. Dibutylphthalat oder Dioctylphthalat, Chlorkautschuk, Polyvinylchlorid, Polyvinylalkohol, Polyvinylester, Polyvinylpyrrolidon, Alkoxysilanstrukturen enthaltende Produkte, Fluor enthaltend Produkte, blockierte Isocyanatgruppen enthaltende Substanzen, Phenolharze, Carboxylfunktionelle Polymere bzw. Oligomere, Epoxyfunktionelle Polymere bzw. Oligomere, Polyamidharze, Siliconharze, Wasserglas, Polymere oder Oligomere auf Basis von Kieselsäureestern, Kieselsole, Kieselgele.

Durch Zusatz der Komponenten e) können, falls dies für bestimmte Anforderungen notwendig ist, spezielle Eigenschaften der erfindungsgemäßen Spachtelmassen eingestellt werden.

Epoxy- oder carbodiimidfunktionelle Komponenten e) können z.B. zugesetzt werden, um nach Applikation der Spachtelmasse eine zusätzliche Vernetzungsreaktion zwischen Carboxylgruppen des Polyurethans- bzw. Polyurethan-Polyharnstoffes und den Epoxygruppen zu ermöglichen und dadurch z.B. eine zweistufige Vernetzung und hohe Vemetzungsdichten zu erhalten.

Ein geeignetes Verfahren zur Herstellung von wässrigen reaktiven Spachtelmassen, ist dadurch gekennzeichnet, dass zunächst aus mindestens einer Polyurethan- bzw. Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die mindestens 85 Gew.-% der erfindungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die bis zu 15 Gew.-% der erfindungsgemäßen Spachtelmasse ausmacht, nämlich mindestens einem Polyisocyanatvernetzer b), zu der erfindungsgemäßen wässrigen reaktiven Spachtelmasse homogen vermischt wird.

Ein weiteres geeignetes Verfahren zur Herstellung von wässrigen reaktiven Spachtelmassen, ist dadurch gekennzeichnet, dass zunächst aus mindestens einer Polyurethan- bzw. Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die 90,2 bis 99,7 Gew.-% der erfindungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die 9,8 bis 0,3 Gew.-% der erfindungsgemäßen Spachtelmasse ausmacht, nämlich mindestens einem Polyisocyanatvernetzer b), zu der wässrigen reaktiven Spachtelmasse homogen vermischt wird.

Ein weiteres geeignetes Verfahren zur Herstellung von wässrigen reaktiven Spachtelmassen, ist dadurch gekennzeichnet, dass zunächst aus mindestens einer isocyanatreaktive Gruppen enthaltenden Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 10 Gew.-% bezogen auf Gesamtfeststoffgehalt organischem Lösemittel und/oder Wasser f) in einem geeigneten technischen Apparat eine Komponente, die 96 bis 99,5 Gew.-% der erfindungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die 4 bis 0,5 Gew.-% der erfindungsgemäßen Spachtelmasse ausmacht, nämlich mindestens einem Polyisocyanatvernetzer b), zu der erfindungsgemäßen wässrigen reaktiven Spachtelmasse homogen vermischt wird.

Ein weiteres geeignetes Verfahren zur Herstellung von reaktiven Spachtelmassen, ist dadurch gekennzeichnet, dass zunächst aus mindestens einer Polyurethan- bzw. Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) gegebenenfalls bis zu 10 Gew.-% bezogen auf Gesamtfeststoffgehalt organischem Lösemittel und/oder Wasser f) und mindestens einem Polyisocyanatvernetzer b) die erfindungsgemäße Spachtelmasse in einem geeigneten technischen Apparat, unmittelbar vor der Verarbeitung der wässrigen reaktiven Spachtelmasse, hergestellt wird, und diese dann gegebenenfalls durch Zugabe von Wasser und/oder organischem Lösemittel auf die erforderliche Verarbeitungskonsistenz eingestellt wird.

Es können durch geeignete Rohstoffauswahl, Additive, Füllstoffe, Pigmente sowohl hochstreaktive wässrige Spachtelmassen mit sehr schneller Schleifbarkeit, bei dann relativ kurzer Verarbeitungszeit bzw. kurzem Potlife, als auch wässrige Spachtelmassen mit guter Reaktivität bzw. Schleifbarkeit und sehr langer Verarbeitungszeit, hergestellt werden. Die erfindungsgemäßen Spachtelmassen auf Basis der Polyurethan- bzw. Polyurethan-Polyharnstoff-Dispersionen zeichnen sich außerdem dadurch aus, das sie in der Regel über eine für Spachtelmassen ausgezeichnete Flexibilität verfügen. Durch geeignete Rohstoffauswahl, wie z.B. vorzugsweise aliphatische Polyisocyanate und lichtechte Polyesterpolyole /oder ist es auch möglich, lichtechte wässrige reaktive Spachtelmassen herzustellen, die unter den Bedingungen der verschiedenen Anwendungen von Spachtelmassen keine Verfärbung, Kreidung oder Abbauerscheinungen zeigen.

Mit den erfindungsgemäßen Spachtelmassen ist es somit möglich, praktisch alle denkbaren Anforderungsprofile für Spachtelmassen zu erfüllen.

Die erfindungsgemäßen Spachtelmassen enthalten nur geringe Mengen flüchtiger organischer Substanzen. Deren Anteil beträgt vorzugsweise weniger als 15, ganz besonders bevorzugt weniger als 7,5 Gew.-%.

Komponenten a), b), c), d) und e) können prinzipiell in beliebiger Reihenfolge bei der Herstellung der erfindungsgemäßen Spachtelmassen ein- bzw. zugesetzt werden. Das optimale Verfahren ist im Einzelfall zu ermitteln und hängt z.B. vom jeweiligen Anforderungsprofil des Spachtels und der Reaktivität der einzelnen Rohstoffe ab.

Geeignete technische Apparate zur Herstellung der erfindungsgemäßen wässrigen reaktiven Spachtelmassen können z.B. sein: Kneter, Mischer wie z.B. Planetenmischer oder Butterflymischer, Dissolver.

Die erfindungsgemäßen wässrigen reaktiven Spachtelmassen können beispielsweise appliziert werden als Ziehspachtel, Streichspachtel, Gießspachtel, Spritzspachtel.

Die Aushärtung der erfindungsgemäßen wässrigen reaktiven Spachtelmassen kann bei 0 bis 80°C, vorzugsweise bei Raumtemperatur erfolgen. Eine Aushärtung bei höheren Temperaturen oder insbesondere unter Einsatz von IR-Trocknern oder auch durch Mikrowellentrockner ist ebenfalls möglich.

Die erfindungsgemäßen wässrigen reaktiven Spachtelmassen sind hervorragend geeignet als Reparaturspachtelmassen z.B. für Holz, holzartige Untergründe und/oder Kork, für metallische Untergründe, Fahrzeugkarosserien und/oder Kunststoffe, für Marmor, Granit, Beton bzw. mineralische Untergründe.

Spachtelmassen dienen z.B. zur Herabsetzung des Saugvermögens saugender Untergründe, zum Füllen und Glätten von Kanten und Flächen, zum Auffüllen von Vertiefungen, Hohlräumen, Poren, Dellen, Kratzern bis hin zu Löchern.

Autoreparaturspachtel ermöglichen so z.B. das Wiederherstellen ebener bzw. glatter Oberflächen für die anschließende Lackierung, die üblicherweise aus Grundierung, Füller und Decklack(en) besteht.

Marmorspachtel ermöglichen so, nach Auffüllen von Vertiefungen, Hohlräumen und Poren, das Zuschneiden , Schleifen und Polieren der Werkstücke zu glatten, hochwertigen Marmorteilen, die z.B. als Boden-, Treppen- oder Fensterbankbelag dienen können.

Holzspachtel ermöglichen so z.B. das Füllen und Glätten von Fehlstellen, Astlöchern usw. in Holz bzw. Holzwerkstoffen, so dass anschließend eine einheitliche, flächige, hochwertige Lackierung erfolgen kann.

Die erfindungsgemäßen wässrigen reaktiven Spachtelmassen zeichnen sich aus durch gute Trocknung bzw. Aushärtung auch in dicken Schichten, lange Verarbeitungszeiten von bis zu 30Minuten und mehr, durch sehr gute Haftung, auch auf kritischen Untergründen, durch gute Beständigkeitseigenschaften, durch gute Schleifbarkeit, durch gute Verarbeitbarkeit, insbesondere Verziehbarkeit und eine praxisgerechte Spachtelkonsistenz, durch hohes Füllvermögen, durch hochelastische Eigenschaften und durch das völlige Fehlen von Schrumpf bei der Aushärtung.

Unter wässrigen reaktiven Spachtelmassen sind dabei wässrige 2-Komponenten-Bindemittelkombinationenen enthaltende Spachtelmassen zu verstehen, die neben mindestens einem Polyurethan bzw. Polyurethan-Polyharnstoff a) mindestens einen reaktiven Vernetzer mit freien Isocyanatgruppen b) enthalten, und unter Ausbildung eines Polyurethan- bzw. eines Polyurethan-Polyharnstoffnetzwerkes abreagiert. Die erfindungsgemäßen Spachtelmassen weisen ein beschränktes Potlife bzw. eine beschränkte Verarbeitungszeit auf. Durch Auswahl geeigneter Rohstoffe bei der Herstellung von a) bzw. b) und durch Auswahl von art und Menge insbesondere der Komponente c), aber auch von d) und gegebenenfalls e), ist ein Anpassen der Reaktivität und des Potlifes bzw. der Verarbeitungszeit an die jeweiligen Anforderungen möglich. Es können prinzipiell sehr reaktive Systeme, vor allem aber Systeme mit langer Verarbeitungszeit und trotzdem noch guter Reaktivität hergestellt werden.

Die erfindungsgemäßen wässrigen reaktiven Spachtelmassen sind auch geeignet zur Verwendung in Dübelmassen und als dickschichtige Füller. Die erfindungsgemäßen wässrigen reaktiven Spachtelmassen sind auch geeignet zur Verwendung in oder zu Herstellung von glasfaserverstärkten Kunststoffen bzw. glasfaserverstärkten Flächengebilden oder Gießmassen.

### Beispiele:

### Komponenten b):

### Polyisocyanat 1)

Allophanathydrophiliertes Polyisocyanat 1) auf Basis von Hexamethylendiisocyanat: In einem Rührgefäß mit Rühr-, Kühl- und Heizvorrichtung werden 850 g eines Hexamethylendiisocyanat-Trimerists (Desmodur® N 3300, Bayer AG) unter trockenem Stickstoff zusammen mit 0,05 g Dibutylphosphat (Stabilisator) und 0,4 g Zink-(II)-2-ethyl-1-hexanoat (Allophanatisierungskataly-sator) bei 100 °C vorgelegt. Innerhalb von 40 Minuten werden dann 150 g eines Polyethylenglykolmonomethylethers (Pluriol® A 500E, OH-Zahl 112 mg KOH/g, BASF AG) so zudosiert, das die Reaktionstemperatur 105 °C nicht überschreitet. Nach Ende der Polyetherzugabe wird weitere 2 bis 3 Stunden bei 100 °C gerührt, bis der einer vollständigen Allophanatisierung theoretisch entsprechende Isocyanatgehalt von 15,9 % erreicht ist. Der Katalysator wird dann durch Zugabe von 0,1 g Benzoylchlorid desaktiviert und das Reaktionsgemisch auf Raumtemperatur abgekühlt. Man erhält ein wasserdispergierbares, hydrophiliertes Polyisocyanat 1) mit einer Viskosität von ca. 6000 mPas/23°C, einer Isocyanatfunktionalität von 4 und einem Isocyanatgehalt von 15,9 %.

### Polyisocyanat 2)

Hydrophobes, niedrigviskoses Polyisocyanat 2): 4-Isocyanatomethyl-1,8-octandiisocyanat (Nonantriisocyanat, Bayer AG), Viskosität 12 mPas/ 23°C, Isocyanatfunktionalität 3, Isocyanatgehalt 50,1 %.

### Polyisocyanat 3)

Hydrophobes Polyisocyanat 3): Hexamethylendiisocyanattrimerisat mit Iminooxadizindionstruktureinheiten. Viskosität 1 000 mPas/23°C, Isocyanatgehalt 23,3 % (Desmodur® VP LS 2294, Bayer AG).

### Komponenten a):

### Polyurethan-Polyharnstoff-Dispersion 4)

In einem 10-1-Reaktionsgefäß mit Rühr-, Kühl- und Heizvorrichtung werden unter Stickstoff 447 g eines Polyesterdiols auf Basis Adipinsäure, Phthalsäureanhydrid, Neopentylglykol, Hexandiol (Molekulargewicht 1140 g/Mol), 32 g Neopentylglykol und 45 g Dimethylolpropionsäure eingewogen und nach Zugabe von 250 g N-Methylpyrrolidon gelöst und bei 70 °C homogenisiert. Nachdem eine homogene Lösung entstanden ist, wird eine Mischung aus 182 g Desmodur® W (Bayer AG) und 229 g Desmodur I (Bayer AG) auf einmal zugegeben. Durch die Exothermie steigt die Temperatur auf etwa 100°C an, es wird solange gerührt, bis der theoretische NCO-Wert erreicht wird. Anschließend werden bei 50°C 17 g Triethylamin und 21,6 g Diisopropyl-ethylamin als Neutralisationsmittel zugegeben und nach 10 Minuten in 1400 g destilliertem Wasser unter intensivem Rühren dispergiert. 5 Minuten nach dem Dispergieren wird eine Kettenverlängerungslösung aus 13,3 g Ethylendiamin, 15,1 g Diethylentriamin und 75 g Wasser in 15 Minuten zugegeben. Es wird bei 50°C solange gerührt, bis keine freien Isocyanatgruppen mehr nachweisbar sind. Man erhält eine Polyurethan-Polyharnstoff-Dispersion 4) mit einen Feststoffgehalt von 36 Gew.-%, einer Viskosität von 20" (23°C, DIN 4 Auslaufbecher) und einem pH-Wert von 7,4.

### Polyurethan-Polyharnstoff-Dispersion 5)

In einem 10-l-Reaktionsgefäß mit Rühr-, Kühl- und Heizvorrichtung werden unter Stickstoff 1694 g eines Polyesterdiols auf Basis Adipinsäure, Hexandiol (Molekulargewicht 840 g/Mol), 70 g Trimethylolpropan und 300 g eines Natriumsulphonatgruppen enthaltenden Diols (Molekulargewicht 432 g/Mol) eingewogen und bei 90 °C aufgeschmolzen und nach Zugabe von 360 g N-Methylpyrrolidon homogenisiert. Nachdem eine homogene Lösung entstanden ist, werden bei 80°C 1280 g Desmodur W (Bayer AG) und 233 g Desmodur® H (Bayer AG) auf einmal zugegeben. Durch die Exothermie steigt die Temperatur auf etwa 120°C an, es wird solange gerührt, bis der theoretische NCO-Wert leicht unterschritten wird. Anschließend werden bei 75°C als Kettenverlängerungsmittel 220 g Acetonazin zugegeben und nach 10 Minuten 4400 g, auf 60 °C erwärmtes, destilliertes Wasser in 5 Minuten unter intensivem Rühren zugegeben. Es wird bei 50 °C solange gerührt, bis keine freien Isocyanatgruppen mehr nachweisbar sind. Man erhält eine Polyurethan-Polyharnstoff-Dispersion 5) mit einen Feststoffgehalt von 40 Gew.-%, einer Viskosität von 15" (23°C, DIN 4 Auslaufbecher) und einem pH-Wert von 6,8.

### Polyurethan-Polyharnstoff-Dispersion 6)

In einem 10-l-Reaktionsgefäß mit Rühr-, Kühl- und Heizvorrichtung werden unter Stickstoff 447 g eines Polyesterdiols auf Basis Adipinsäure, Phthalsäureanhydrid, Neopentylglykol, Hexandiol (Molekulargewicht 1140 g/Mol), 32 g Neopentylglykol und 45 g Dimethylolpropionsäure eingewogen und nach Zugabe von 250 g N-Methylpyrrolidon gelöst und bei 70 °C homogenisiert. Nachdem eine homogene Lösung entstanden ist, werden 452 g Desmodur W auf einmal zugegeben. Durch die Exothermie steigt die Temperatur auf etwa 100 °C an, es wird solange gerührt, bis der theoretische NCO-Wert erreicht wird. Anschließend werden bei 50 °C 34 g Triethylamin als Neutralisationsmittel zugegeben und nach 10 Minuten in 1400 g destilliertem Wasser unter intensivem Rühren dispergiert. 5 Minuten nach dem Dispergieren wird eine Kettenverlängerungslösung aus 25g Hydroxyethylethylendiamin, 15,1 g Diethylentriamin und 75 g Wasser in 15 Minuten zugegeben. Es wird bei 50 °C solange gerührt, bis keine freien Isocyanatgruppen mehr nachweisbar sind. Man erhält eine Polyurethan-Polyharnstoff-Dispersion 6) mit einen Feststoffgehalt von 37 Gew.-%, einer Viskosität von 15" (23°C, DIN 4 Auslaufbecher) und einem pH-Wert von 7,7.

### Polyurethan-Polyharnstoff-Dispersion 7)

In einem 10-l-Reaktionsgefäß mit Rühr-, Kühl- und Heizvorrichtung werden unter Stickstoff 508 g eines Polyesterdiols auf Basis Adipinsäure, Hexandiol (Molekulargewicht 840 g/Mol), 59 g Neopentylglykol, 22 g eines monohydroxyfunktionellen hydrophilen Polyethers (Polyether LB25, MG 2250, Bayer AG) und 55,6 g Dimethylolpropionsäure eingewogen, bei 75 °C aufgeschmolzen und nach Zugabe von 450 g N-Methylpyrrolidon homogenisiert. Nachdem eine homogene Lösung entstanden ist, werden bei 75°C 201 g Diisocyanatodiphenylmethan und 416 g Desmodur W nacheinander schnell zugegeben. Durch die Exothermie steigt die Temperatur auf etwa 110 °C an, es wird solange bei 100°C gerührt, bis der theoretische NCO-Wert erreicht ist. Nach Abkühlen auf 70°C wird eine Neutralisationsmittelmischung aus 20 g Polyether LB25, 45 g Triethylamin und 110 g N-Methylpyrrolidon zugegeben und 10 Minuten homogenisiert. Anschließend wird in auf 30°C 1600 g erwärmtes, destilliertes Wasser in 5 bis 10 Minuten unter intensivem Rühren dispergiert. Anschließend werden als Kettenverlängerungsmittel 223 g Wasser, 36 g Hydroxyethylethylendiamin, 10 g Diethylentriamin und 8 g Hydrazinhydrat in 10 Minuten zugegeben bei 50°C solange gerührt, bis keine freien Isocyanatgruppen mehr nachweisbar sind. Man erhält eine Polyurethan-Polyharnstoff-Dispersion 7) mit einen Feststoffgehalt von 35 Gew.-%, einer Viskosität von 25" (23°C, DIN 4 Auslaufbecher) und einem pH-Wert von 8,0.

### Anwendungsbeispiel A)

In einem Labordissolver wird eine Spachtelmasse aus 100 g **Polyurethan-Polyharnstoff-Dispersion 4),** 10 g einer Wasser/Butylglykol = 1:1 Mischung, 10 g Finntalk® M 40 (Talkum für gute Schleifbarkeit, Finnminerals, Finnland), 75g Westmin D 100 (Talkum für hohe Füllung), Westmin Minerals, Australien), 1,3 g Foamaster® TCX (Entschäumer, Henkel, Deutschland), 50 g Mikhart® 10 (Calciumcarbonat, Zuschlagextender, Provenciale, Frankreich), 10 g Zinkphosphat ZP10 (Korrosionschutzpigment, Heubach, Deutschland) und zusätzlich 30 g Finntalk als zusätzlich, variable Zusatzmenge zur Einstellung der Spachtelkonsistenz, hergestellt. 100 g dieser ersten Komponente werden im Laborrührer mit 3,4 g Polyisocyanat 1) homogen vermischt.

Die so hergestellte erfindungsgemäße wässrige reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz^{1:} gut
- Verziehbarkeitbarkeit²: gut
- Schleifbarkeit³: nach 30 Minuten 5
   nach 60 Minuten 4c
   nach 90 Minuten 1c
   nach 120 Minuten 0a
- Haftung⁴: sehr gut (nach 90 Minuten)
- Pendelhärte⁵: nach 4 Stunden Raumtemperaturtrocknung: 13"
   nach 24 Stunden Raumtemperaturtrocknung: 24"
   nach 2 Stunden Trocknung bei 80°C: 78"
- Trocknungszeit⁶: 90 Minuten
- Potlife⁷: > 8 Stunden
- Verarbeitungszeit⁸: 30 Minuten

¹ Die Beurteilung der Spachtelkonsistenz erfolgt nach folgende qualitativen Abstufung::
Gut>zufriedenstellend>dick bzw. dünn>zu dick bzw. zu dünn.
² Die Beurteilung der Verziehbarkeit erfolgt nach folgender qualitativen Abstufung: Gut verziehbar>noch gut verziehbar>schwer verziehbar>nicht verziehbar.
³ Die Beurteilung der Schleifbarkeit erfolgt wie folgt:
Die Schleifbarkeit selbst wird von sehr gut =0 bis sehr schlecht =5, mit den Zwischenabstufungen gut = 1, noch gut = 2, mäßig = 3, schlecht = 4, beurteilt.
Sehr wichtig ist auch die Zeit bis die gewünschte Schleifbarkeit erreicht ist, je kürzer die benötigte Zeit, umso besser. Das Erreichen einer guten Schleifbarkeit innerhalb einer Stunde bei Raumtemperaturaushärtung ist dabei insgesamt als sehr gut zu bewerten. Spachtelmassen, die bei Raumtemperatur länger als drei Stunden zum Erreichen einer guten Schleifbarkeit benötigen, sind insgesamt als weniger gut geeignet zu beurteilen.
Außerdem wird auch das Zusetzen des Schleifpapiers während des Schleifens beurteilt, dabei bedeutet a = setzt nicht zu (beste Bewertung), b = setzt etwas zu und c = setzt stark zu (schlechteste Bewertung).
⁴ Die Haftung wird anhand der Dauer bis zum Erreichen einer guten Haftung beurteilt:
Haftung innerhalb von 2 Stunde: Sehr gut
Haftung innerhalb von 6 Stunden: Gut
Haftung innerhalb von 24 Stunden: noch akzeptabel
Dauer bis zum Erreichen einer guten Haftung mehr als 24 Stunden, bzw. überhaupt keine
Haftung: Schlecht
⁵ Die Pendelhärte (DIN 53157) wird an Filmen (250 µm nass) der Bindemittelkombination aus Komponente a) und Komponente b) nach Zugabe von 10 Gew.-% Butylglykol und Entschäumer durchgeführt, um vergleichbare Werte ohne Einfluss der Komponente c) zu erhalten. Dabei sind Pendelhärtenvon >100" nach 24 Stunden Trocknung bei Raumtemperatur als sehr gut zu bezeichnen.
⁶ Die Trocknungszeit wird an den Filmen entsprechend der Pendelhärtebestimmung, allerdings mit einer Nassfilmstärke von 500 µm gemessen. Angegeben ist die Zeit, bis einer Prüfung mit Finger keine Abdrücke mehr erkennbar sind (Fingertrocknung). Je schneller die Trocknung, umso besser die Eignung für Spachtelmassen.
⁷ Als Potlife wurde die Zeitspanne definiert, bis die Spachtelmasse erkennbare Veränderungen zeigt, wie z.B. deutlicher Viskositätsanstieg, Klumpenbildung, Ausfällungen, Vernetzung.
⁸Als Verarbeitungszeit wird der Zeitraum angegeben, in dem die wässrige reaktive Spachtelmasse sicher verarbeitbar ist und zu reproduzierbaren Ergebnissen führt. Häufig ist die tatsächliche Verarbeitungszeit länger, diese Zeit kann jedoch Schwankungen unterworfen sein, es können schon erste Veränderungen der Spachtelmasse, wie z.B. Hautbildung oder Veränderungen in den Applikationseigenschaften, wie z.B.eine weniger gute Verziehbarkeit, oder Veränderungen in den Endeigenschaften der applizierten Spachtelmassen, wie eine etwas verlängerte Zeit bis zum Ereichen einer guten Haftung auftreten. Trotz dieser beginnenden Veränderungen ist es häufig noch möglich, ausgehärtete Spachtelmassen mit guten Endeigenschaften nach Applikation und Aushärtung zu erhalten.

Die erfindungsgemäße wässrige reaktive Spachtelmasse zeigt durchweg sehr gute Eigenschaften. Sie vereint ausgezeichnete Verarbeitbarkeit mit guter Trocknung und Schleifbarkeit, es wird eine schnelle Haftung erreicht, die Härte genügt den Anforderungen. Die Verarbeitungszeit ist ausgesprochen lang und genügt damit höchsten Anforderungen. Insbesondere die hohe Elastizität der Spachtelmassen ist bemerkenswert, ebenso die Tatsache, dass keinerlei Schrumpf zu beobachten ist. Die Spachtelmasse ist lichtecht.

### Anwendungsbeispiel B)

Anwendungsbeispiel A) mit **Polyurethan-Polyharnstoff-Dispersion 4)** wird wiederholt, wobei jedoch eine Mischung aus **1,8 g Polyisocyanat 1)** und **1,8 g Polyisocyanat 3)** eingesetzt wird.

Die so hergestellte erfindungsgemäße wässrige reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 5
   nach 60 Minuten 3a
   nach 90 Minuten 1a
   nach 120 Minuten 0a
- Haftung: sehr gut (nach 90 Minuten)
- Pendelhärte: nach 4 Stunden Raumtemperaturtrocknung: 26"
   nach 24 Stunden Raumtemperaturtrocknung: 62"
   nach 2 Stunden Trocknung bei 80°C: 94"
- Trocknungszeit: 100 Minuten
- Potlife: > 8 Stunden
- Verarbeitungszeit: 30 Minuten

Auch diese Spachtelmasse zeigt insgesamt gute Eigenschaften. Auch sie ist ohne Schrumpf, lichtecht und elastisch.

### Anwendungsbeispiel C)

Anwendungsbeispiel A) wird wiederholt, wobei jedoch **Polyurethan-Polyharnstoff-Dispersion 5)** zusammen mit 3,8 **Polyisocyanat 1)** eingesetzt wird.

Die so hergestellte erfindungsgemäße wässrige reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 5
   nach 60 Minuten 4c
   nach 90 Minuten 3c
   nach 120 Minuten 0a
- Haftung: sehr gut (nach 90 Minuten)
- Lagerstabilitätsprüfung: Beurteilung der Spachtelkonsistenz der ersten Komponente bei Raumtemperaturlagerung:
   nach 10 Tagen: in Ordnung
   nach 30 Tagen: in Ordnung
- Pendelhärte: nach 4 Stunden Raumtemperaturtrocknung: 22"
   nach 24 Stunden Raumtemperaturtrocknung: 39"
   nach 2 Stunden Trocknung bei 80°C: 54"
- Trocknungszeit: 90 Minuten
- Potlife: > 8 Stunden
- Verarbeitungszeit: 25 Minuten

Auch diese Spachtelmasse zeigt insgesamt gute Eigenschaften. Auch sie ist ohne Schrumpf, lichtecht und sehr elastisch.

### Anwendungsbeispiel D)

Anwendungsbeispiel A) wird wiederholt, wobei **jedoch Polyurethan-Polyharnstoff-Dispersion 6)** zusammen mit 3,4 g **Polyisocyanat 1)** eingesetzt wird.

Die so hergestellte erfindungsgemäße wässrige reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 5
   nach 60 Minuten 2-3c
   nach 90 Minuten 1c
   nach 120 Minuten 0a
- Haftung: sehr gut (nach 105 Minuten)
- Pendelhärte: nach 4 Stunden Raumtemperaturtrocknung: 19"
   nach 24 Stunden Raumtemperaturtrocknung: 32"
   nach 2 Stunden Trocknung bei 80°C: 84"
- Trocknungszeit: 90 Minuten
- Potlife: > 8 Stunden
- Verarbeitungszeit: 20 Minuten

Auch diese Spachtelmasse zeigt insgesamt gute Eigenschaften. Auch sie ist ohne Schrumpf, lichtecht und sehr elastisch.

### Anwendungsbeispiel E)

Anwendungsbeispiel A) wird wiederholt, wobei jedoch **Polyurethan-Polyharnstoff-Dispersion 7)** zusammen mit 2,5 g **Polyisocyanat 1)** und 1 g **Polyisocyanat 3)** eingesetzt wird.

Die so hergestellte erfindungsgemäße wässrige reaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 5
   nach 60 Minuten 2c
   nach 90 Minuten 0a-b
- Haftung: sehr gut (nach 90 Minuten)
- Pendelhärte: nach 4 Stunden Raumtemperaturtrocknung: 15"
   nach 24 Stunden Raumtemperaturtrocknung: 52"
   nach 2 Stunden Trocknung bei 80°C: 90"
- Trocknungszeit: 90 Minuten
- Potlife: > 8 Stunden
- Verarbeitungszeit: 15 Minuten

Auch diese Spachtelmasse zeigt insgesamt gute Eigenschaften. Auch sie ist ohne Schrumpf und sehr elastisch.

### Vergleichsbeispiel F)

Anwendungsbeispiel A) wird wiederholt, allerdings wird auf die Verwendung des Polyisocyanatvernetzers verzichtet.
Folgende Prüfergebnisse wurden ermittelt:
- Spachtelkonsistenz: gut
- Verziehbarkeitbarkeit: gut
- Schleifbarkeit: nach 30 Minuten 5
   nach 45 Minuten 5
   nach 60 Minuten 5
   nach 75 Minuten 5
   nach 90 Minuten 5
   nach 120 Minuten 4d (Prüfung wurde abgebrochen)
- Pendelhärte: nach 4 Stunden Raumtemperaturtrocknung: 12"
   nach 24 Stunden Raumtemperaturtrocknung: 47"
   nach 2 Stunden Trocknung bei 80°C: 93"
- Trocknungszeit: 120 Minuten
- Potlife: 25 Minuten

Diese Spachtelmasse zeigt eine verlangsamte Trocknung, ein etwas kürzeres Potlife, vor allem aber deutliche Defizite in der Schleifbarkeit und ist so nicht praxisgerecht.

### Anwendungsbeispiel G)

Anwendungsbeispiel C) wird wiederholt, wobei jedoch neben 100 g Polyurethan-Polyharnstoff-Dispersion 5) 10 g einer Wasser/Butylglykol = 1:1 Mischung, 100 g Finntalk® M 40, 150 g Schwerspat EWO (Sachtleben, Deutschland), 1,3 g Foamaster® TCX, 50 g Mikhart® 10, 10 g Titandioxid (Bayertitan® R-KB-2, Bayer, Deutschland), 1,5 g Aerosil 200 (Degussa, Deutschland) und 20 g Zinkphosphat ZCP (Korrosionschutzpigment, Heubach, Deutschland) hergestellt.

100 g dieser ersten Komponente werden im Laborrührer mit 3,8 g Polyisocyanat 1) homogen vermischt.

Die so hergestellte erfindungsgemäße wässrige hochreaktive Spachtelmasse wird bei Raumtemperatur in einer Schichtdicke von ca. 1 mm auf ungeschliffene Karosseriebleche aufgezogen.

Folgende Prüfergebnisse wurden ermittelt:
- Spachtelkonsistenz: gut
- Verziehbarkeitbarkeit: gut
- Schleifbarkeit: nach 30 Minuten 5
   nach 60 Minuten 1b
   nach 75 Minuten 0
- Haftung: sehr gut (nach 60 Minuten)
- Pendelhärte: nach 4 Stunden Raumtemperaturtrocknung: 22"
   nach 24 Stunden Raumtemperaturtrocknung: 37"
   nach 2 Stunden Trocknung bei 80°C: 48"
- Trocknungszeit: 60 Minuten
- Potlife: > 8 Stunden
- Verarbeitungszeit: 5 Minuten

Auch diese Spachtelmasse zeigt insgesamt gute Eigenschaften. Sie ist sehr reaktiv, ohne Schrumpf und sehr elastisch.

## Patentansprüche

1. Wässrige reaktive Spachtelmassen, bestehend aus
a) 22 bis 38 Gew.-% mindestens einer Polyurethan-Polyharnstoff-Dispersion
b) 1 bis 7,5 Gew.-% mindestens eines, freie Isocyanatgruppen enthaltenden Polyisocyanats mit einer Viskosität von 10 bis 10 000 mPas/23 °C und einer Funktionalität von 2,15 bis 5,0,
c) 53 bis 75 Gew.-% mindestens eines Pigment und/oder Füllstoffes,
d) 0 bis 2 Gew.-% Hilfsmittel, Zusatzmittel und/oder Additive,
e) 0 bis 20 Gew.-% weitere, gegebenenfalls in Form wässriger Lösung, Dispersion bzw. Emulsion vorliegende Oligomere bzw. Polymere und
f) 0 bis 10 Gew.-% Wasser und/oder organische Lösemittel,
wobei die Summe aus a) bis f) 100 Gew.-% beträgt und wobei das Gewichtsverhältnis von Harz (Feststoff aus Komponente a), aus Komponente b) und gegebenenfalls aus Komponente e)) zu Pigment/Füllstoff (Feststoff aus Komponente c)) 1:2,1 bis 1:10 beträgt.

2. Wässrig reaktive Spachtelmassen gemäß Anspruch 1, **dadurch gekennzeichnet, dass** die Komponente a) das Umsetzungsprodukt aus
a1) 35 bis 85 Gew.-% mindestens einer Polyolkomponente,
a2) 5 bis 50 Gew.-% mindestens einer Di- und/oder Polyisocyanatkomponente,
a3) 1,5 bis 10 Gew.-% mindestens einer (potentiell) ionischen Verbindungen mit mindestens einer, gegebenenfalls mindestens teilweise neutralisiert vorliegenden, zur Salzbildung fähigen Gruppe und mindestens einer gegenüber Isocyanatgruppen reaktiven Gruppe und gegebenenfalls einer hydrophilen, nichtionischen Verbindung, bestehend aus Verbindungen mit mindestens einer gegenüber Isocyanatgruppen reaktiven Gruppe und mindestens einer hydrophilen Polyetherkette,
a4) 1 bis 10 Gew.-% mindestens einer von a1) bis a3) verschiedenen mono-, di- und/oder polyfunktionellen niedermolekularen Aufbaukomponente des Molekulargewichtsbereiches 32 bis 450, enthält,
wobei Komponente(n) a3) in solcher Menge eingesetzt werden, daß eine stabile Dispersion entsteht.

3. Verfahren zur Herstellung von wässrigen reaktiven Spachtelmassen gemäß Anspruch 1, **dadurch gekennzeichnet, daß** zunächst aus mindestens einer Polyurethan- bzw. Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die mindestens 85 Gew.-% der erfindungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die bis zu 15 Gew.-% der erfindungsgemäßen Spachtelmasse ausmacht, nämlich mindestens einem Polyisocyanatvernetzer b), zu der erfindungsgemäßen Spachtelmasse homogen vermischt wird.

4. Verfahren zur Herstellung von wässrigen reaktiven Spachtelmassen gemäß Anspruch 1, **dadurch gekennzeichnet, daß** zunächst aus mindestens einer Polyurethan- bzw. Poly-urethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 20 Gew.-% bezogen auf Gesamtfeststoffgehalt organischem Lösemittel und/oder Wasser f) in einem geeigneten technischen Apparat eine Komponente, die 90,2 bis 99,7 Gew.-% der erfindungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die 9,8 bis 0,3 Gew.-% der erfindungsgemäßen Spachtelmasse ausmacht, nämlich mindestens einem Polyisocyanatvernetzer b), zu der erfindungsgemäßen Spachtelmasse homogen vermischt wird.

5. Verfahren zur Herstellung von wässrigen reaktiven Spachtelmassen gemäß Anspruch 1, **dadurch gekennzeichnet, daß** zunächst aus mindestens einer isocyanatreaktive Gruppen enthaltenden Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) und gegebenenfalls bis zu 10 Gew.-% bezogen auf Gesamtfeststoffgehalt organischem Lösemittel und/oder Wasser f) in einem geeigneten technischen Apparat eine Komponente, die 96 bis 99,5 Gew.-% der erfmdungsgemäßen Spachtelmasse ausmacht, mit der für eine praxisgerechte Verarbeitung erforderlichen Konsistenz hergestellt wird, und diese dann direkt vor der Verarbeitung mit der zweiten Komponente, die 4 bis 0,5 Gew.-% der erfindungsgemäßen Spachtelmasse ausmacht, nämlich mindestens einem Polyisocyanatvernetzer b), zu der erfindungsgemäßen wässrigen reaktiven Spachtelmasse homogen vermischt wird.

6. Verfahren zur Herstellung von wässrigen reaktiven Spachtelmassen gemäß Anspruch 1, **dadurch gekennzeichnet, daß** zunächst aus mindestens einer Polyurethan- bzw. Polyurethan-Polyharnstoff-Dispersion a) mit Pigment bzw. Pigmentgemischen, Füllstoffen bzw. Füllstoffgemischen c) gegebenenfalls Additiven, Hilfs- bzw. Zusatzmittel d), gegebenenfalls weiteren, gegebenenfalls in Form wässriger Lösung, Dispersion bzw. Emulsion vorliegenden Oligomeren bzw. Polymeren e) gegebenenfalls bis zu 10 Gew.-% bezogen auf Gesamtfeststoffgehalt organischem Lösemittel und/oder Wasser f) und mindestens einem Polyisocyanatvernetzer b) die erfindungsgemäße Spachtelmasse in einem geeigneten technischen Apparat, unmittelbar vor der Verarbeitung der Spachtelmasse, hergestellt wird, und diese dann gegebenenfalls durch Zugabe von Wasser und/oder organischem Lösemittel auf die erforderliche Verarbeitungskonsistenz eingestellt wird.

7. Wässrige reaktive Spachtelmassen gemäß Anspruch 1, **dadurch gekennzeichnet, daß** durch Umsetzung von hydrophilen Polyethern mit aliphatischen und/oder cycloaliphatischen Polyisocyanaten unter Einsatz geeigneter Katalysatoren herstellbare, allophanathydrophilierte Polyisocyanate b) enthalten sind.

8. Wässrige reaktive Spachtelmassen gemäß Anspruch 1, **dadurch gekennzeichnet, daß** als Polyisocyanat b) ein Hexamethylendiisocyanat-Polyisocyanat mit Iminooxadiazindionstruktureinheiten enthalten ist.

9. Wässrige reaktive Spachtelmassen gemäß Anspruch 1, **dadurch gekennzeichnet, daß** als Polyisocyanat b) Nonantriisocyanat enthalten ist.

10. Wässrige reaktive Spachtelmasse gemäß Anspruch 1, **dadurch gekennzeichnet, daß** Komponente c) zu maximal 10 Gew.-% bezogen auf Gesamtmenge an c) aus anorganischen, farbgebenden Pigmenten besteht.

11. Wässrige reaktive Spachtelmassen gemäß Anspruch 2, **dadurch gekennzeichnet, daß** hydrophile Gruppen enthaltende Verbindungen a3) teilweise oder vollständig in Polyolkomponenten a1) über Estergruppen in die Polyurethan- bzw. Polyurethan-Polyharnstoff-Dispersionen eingebaut sind.

12. Wässrige reaktive Spachtelmassen gemäß reaktive Spachtelmassen gemäß Anspruch 1, **dadurch gekennzeichnet, daß** niedrigviskose hydrophobe Polyisocyanate auf Basis Hexamethylendiisocyanat mit Isocyanurat-, Uretdion-, Allophanat- und/oder Urethanstruktureinheiten und/oder durch Umsetzung mit hydrophilen Polyethern hydrophil modifizierte Polyisocyanate auf Basis Hexamethylendiisocyanat als Polyisocyanat b) enthalten sind.

13. Wässrige reaktive Spachtelmassen gemäß Anspruch 1, **dadurch gekennzeichnet, daß** als Komponente a) copolymerisat- bzw. polyacrylatmodifizierte Polyurethan- bzw. Polyurethan-Polyharnstoff-Dispersionen enthalten sind.

14. Wässrige reaktive Spachtelmassen gemäß Anspruch 1, **dadurch gekennzeichnet, daß** als Komponente a) Polyurethan- bzw. Polyurethan-Polyharnstoff-Dispersionen enthalten sind, deren Molekulargewicht Mw > 50000 beträgt.

15. Wässrige reaktive Spachtelmassen gemäß Anspruch 1, **dadurch gekennzeichnet, daß** als Komponente e) epoxyfunktionelle Oligomere bzw. Polymere enthalten sind.

16. Wässrige reaktive Spachtelmassen gemäß Anspruch 1, **dadurch gekennzeichnet, daß** sie durch Verwendung lichtechter Komponenten a) und b) unter den für Spachtelmassen üblichen Anwendungsbedingungen zu lichtechten, verfärbungs- und abbaustabilen Spachtelmassen aushärten.

17. Wässrige reaktive Spachtelmassen gemäß Anspruch 1, **dadurch gekennzeichnet**, das weniger als 5 Gew.-% flüchtiger organischer Substanzen enthalten sind.

18. Verwendung wässriger reaktiver Spachtelmassen gemäß Anspruch 1 zur Beschichtung von Holz, holzartige Untergründe und/oder Kork.

19. Verwendung wässriger reaktiver Spachtelmassen gemäß Anspruch 1 zur Beschichtung von metallische Untergründe, Fahrzeugkarosserien und/oder Kunststoffe.

20. Verwendung wässriger reaktiver Spachtelmassen gemäß Anspruch 1 zur Beschichtung von Marmor, Granit bzw. mineralische Untergründe.

21. Verwendung wässriger reaktiver Spachtelmassen gemäß Anspruch 1 zur Herstellung von glasfaserverstärkten Kunststoffen, glasfaserverstärkten Flächengebilden oder Gießharzen.

## Claims

1. Aqueous reactive filler compositions comprising
a) 22 to 38 wt.% of at least one polyurethane-polyurea dispersion
b) 1 to 7.5 wt.% of at least one polyisocyanate containing free isocyanate groups with a viscosity of 10 to 10,000 mPas/23°C and a functionality of 2.15 to 5.0,
c) 53 to 75 wt.% of at least one pigment and/or filler,
d) 0 to 2 wt.% of auxiliary substances, additional substances and/or additives,
e) 0 to 20 wt.% of further oligomers or polymers optionally present in the form of an aqueous solution, dispersion or emulsion and
f) 0 to 10 wt.% of water and/or organic solvents,
the sum of a) to f) being 100 wt.% and the weight ratio of resin (solid from component a), from component b) and optionaly from component e)) to pigment/filler (solid from component c)) being 1:2.1 to 1:10.

2. Aqueous reactive filler compositions according to claim 1, **characterized in that** component a) comprises the reaction product of
a1) 35 to 85 wt.% of at least one polyol component,
a2) 5 to 50 wt.% of at least one di- and/or polyisocyanate component,
a3) 1.5 to 10 wt.% of at least one (potentially) ionic compounds with at least one group which is capable of salt formation and optionally at least partly present in the neutralized form and at least one group which is reactive towards isocyanate groups, and optionally a hydrophilic, nonionic compound, comprising compounds with at least one group which is reactive towards isocyanate groups and at least one hydrophilic polyether chain,
a4) 1 to 10 wt.% of at least one mono-, di- and/or polyfunctional low molecular weight builder component of the molecular weight range 32 to 450 which differs from a1) to a3),
component(s) a3) being employed in an amount such that a stable dispersion is formed.

3. Process for the preparation of aqueous reactive filler compositions according to claim 1, **characterized in that** a component which makes up at least 85 wt.% of the filler composition according to the invention is first prepared with the consistency required for processing appropriate in practice from at least one polyurethane or polyurethane-polyurea dispersion a) with pigment or pigment mixtures, filler substances or filler substance mixtures c), optionally additives, auxiliary substances and additional substances d), optionally further oligomers or polymers e) optionally present in the form of an aqueous solution, dispersion or emulsion, and optionally up to 20 wt.%, based on the total solids content, of an organic solvent and/or water f) in a suitable technical apparatus, and this is then mixed homogeneously, directly before processing, with the second component, which makes up not more than 15 wt.% of the filler composition according to the invention, that is to say at least one polyisocyanate crosslinking agent b), to give the filler composition according to the invention.

4. Process for the preparation of aqueous reactive filler compositions according to claim 1, **characterized in that** a component which makes up 90.2 to 99.7 wt.% of the filler composition according to the invention is first prepared with the consistency required for processing appropriate in practice from at least one polyurethane or polyurethane-polyurea dispersion a) with pigment or pigment mixtures, filler substances or filler substance mixtures c), optionally additives, auxiliary substances and additional substances d), optionally further oligomers or polymers e) optionally present in the form of an aqueous solution, dispersion or emulsion, and optionally up to 20 wt.%, based on the total solids content, of an organic solvent and/or water f) in a suitable technical apparatus, and this is then mixed homogeneously, directly before processing, with the second component, which makes up 9.8 to 0.3 wt.% of the filler composition according to the invention, that is to say at least one polyisocyanate crosslinking agent b), to give the filler composition according to the invention.

5. Process for the preparation of aqueous reactive filler compositions according to claim 1, **characterized in that** a component which makes up 96 to 99.5 wt.% of the filler composition according to the invention is first prepared with the consistency required for processing appropriate in practice from at least one polyurethane-polyurea dispersion a) containing isocyanate-reactive groups with pigment or pigment mixtures, filler substances or filler substance mixtures c), optionally additives, auxiliary substances and additional substances d), optionally further oligomers or polymers e) optionally present in the form of an aqueous solution, dispersion or emulsion, and optionally up to 10 wt.%, based on the total solids content, of an organic solvent and/or water f) in a suitable technical apparatus, and this is then mixed homogeneously, directly before processing, with the second component, which makes up 4 to 0.5 wt.% of the filler composition according to the invention, that is to say at least one polyisocyanate crosslinking agent b), to give the aqueous reactive filler composition according to the invention.

6. Process for the preparation of aqueous reactive filler compositions according to claim 1, **characterized in that** the filler composition according to the invention is first prepared, directly before processing of the filler composition, from at least one polyurethane or polyurethane-polyurea dispersion a) with pigment or pigment mixtures, filler substances or filler substance mixtures c), optionally additives, auxiliary substances and additional substances d), optionally further oligomers or polymers e) optionally present in the form of an aqueous solution, dispersion or emulsion, optionally up to 10 wt.%, based on the total solids content, of an organic solvent and/or water f) and at least one polyisocyanate crosslinking agent b) in a suitable technical apparatus, and this is then optionally adjusted to the required processing consistency by addition of water and/or an organic solvent.

7. Aqueous reactive filler compositions according to claim 1, **characterized in that** they comprise allophanate-hydrophilized polyisocyanates b) which can be prepared by reaction of hydrophilic polyethers with aliphatic and/or cycloaliphatic polyisocyanates employing suitable catalysts.

8. Aqueous reactive filler compositions according to claim 1, **characterized in that** they comprise as polyisocyanate b) a hexamethylene-diisocyanate polyisocyanate with iminooxadiazinedione structural units.

9. Aqueous reactive filler compositions according to claim 1, **characterized in that** they comprise as polyisocyanate b) nonane triisocyanate.

10. Aqueous reactive filler composition according to claim 1, **characterized in that** component c) comprises inorganic colouring pigments to the extent of not more than 10 wt.%, based on the total amount of c).

11. Aqueous reactive filler compositions according to claim 2, **characterized in that** compounds a3) containing hydrophilic groups are incorporated partly or completely in polyol components a1), via ester groups, into the polyurethane or polyurethane-polyurea dispersions.

12. Aqueous reactive filler compositions according to reactive filler compositions according to claim 1, **characterized in that** they comprise low-viscosity hydrophobic polyisocyanates based on hexamethylene-diisocyanate with isocyanurate, uretdione, allophanate and/or urethane structural units and/or, as polyisocyanate b), polyisocyanates which are based on hexamethylene-diisocyanate and are hydrophilically modified by reaction with hydrophilic polyethers.

13. Aqueous reactive filler compositions according to claim 1, **characterized in that** they comprise as component a) copolymer- or polyacrylate-modified polyurethane or polyurethane-polyurea dispersions.

14. Aqueous reactive filler compositions according to claim 1, **characterized in that** they comprise as component a) polyurethane or polyurethane-polyurea dispersions, the molecular weight Mw of which is > 50,000.

15. Aqueous reactive filler compositions according to claim 1, **characterized in that** they comprise as component e) epoxy-functional oligomers or polymers.

16. Aqueous reactive filler compositions according to claim 1, **characterized in that**, by using light-fast components a) and b), they cure under the conventional application conditions for filler compositions to give light-fast filler compositions which are stable to discoloration and degradation.

17. Aqueous reactive filler compositions according to claim 1, **characterized in that** they comprise less than 5 wt.% of volatile organic substances.

18. Use of aqueous reactive filler compositions according to claim 1 for coating wood, woody substrates and/or cork.

19. Use of aqueous reactive filler compositions according to claim 1 for coating metallic substrates, vehicle bodies and/or plastics.

20. Use of aqueous reactive filler compositions according to claim 1 for coating marble, granite and mineral substrates.

21. Use of aqueous reactive filler compositions according to claim 1 for the preparation of glass fibre-reinforced plastics, glass fibre-reinforced sheet-like structures or casting resins.

## Revendications

1. Mastics aqueux réactifs, consistant en :
a) 22 à 38% en poids d'une dispersion de polyuréthanne-polyurée ;
b) 1 à 7,5% en poids d'au moins un polyisocyanate contenant des radicaux isocyanate libres, avec une viscosité allant de 10 à 10 000 mPas/23°C et une fonctionnalité allant de 2,15 à 5,0 ;
c) 53 à 75% en poids d'au moins un pigment et/ou charge ;
d) 0 à 2% en poids d'auxiliaires, adjuvants et/ou additifs ;
e) 0 à 20% en poids d'autres oligomères ou polymères, présents le cas échéant sous la forme d'une solution, dispersion ou émulsion aqueuse, et
f) 0 à 10% en poids d'eau et/ou d'un solvant organique,
où la somme de a) à f) s'élève à 100% et où le rapport pondéral de résine (matière solide du composant a), du composant b) et le cas échéant du composant e)) au pigment/charge (matière solide du composant c)) se situe dans l'intervalle allant de 1:2,1 à 1:10.

2. Mastics réactifs aqueux suivant la revendication 1, **caractérisés en ce que** le composant a) contient le produit de réaction de :
a1) 35 à 85% en poids d'au moins un composant polyol ;
a2) 5 à 50% en poids d'au moins un composant di- et/ou polyisocyanate ;
a3) 1,5 à 10% en poids d'au moins un composé (potentiellement) ionique, avec au moins un radical susceptible de former un sel, présent le cas échéant, au moins partiellement sous forme neutralisée et au moins un radical réactif vis-à-vis des isocyanates et le cas échéant, un composé hydrophile, non ionique, consistant en des composés avec au moins un radical réactif vis-à-vis des isocyanates et au moins une chaine polyéther hydrophile ;
a4) 1 à 10% en poids d'au moins un composant d'élaboration mono-, di- et/ou polyfonctionnel, différent de a1) à a3), d'intervalle de faible poids moléculaire allant de 32 à 450,
où le ou les composants a3) sont mis en oeuvre en une quantité telle qu'il se forme une dispersion stable.

3. Procédé de préparation de mastics aqueux réactifs suivant le revendication 1, **caractérisé en ce que** l'on prépare d'abord à partir d'au moins une dispersion de polyuréthanne ou polyuréthanne-polyurée a) avec le pigment ou mélange de pigments, la charge ou mélange de charges c), le cas échéant les additifs, auxiliaires ou adjuvants d), le cas échéant d'autres oligomères ou polymères, présents le cas échéant sous la forme d'une solution, dispersion ou émulsion aqueuse e) et le cas échéant, jusqu'à 20% en poids, sur base de la teneur totale en matière solide d'un solvant organique et/ou d'eau f) dans un appareil industriel approprié un composant, qui constitue au moins 85% en poids du mastic suivant l'invention, avec la consistance nécessaire à un traitement pratique, et celui-ci est alors mélangé de manière homogène pour former le mastic suivant l'invention, directement avant le traitement, avec le deuxième composant, qui constitue jusqu'à 15% en poids du mastic suivant l'invention, à savoir au moins un réticulant polyisocyanate b).

4. Procédé de préparation de mastics aqueux réactifs suivant la revendication 1, **caractérisé en ce que** l'on prépare d'abord à partir d'au moins une dispersion de polyuréthanne ou polyuréthanne-polyurée a) avec le pigment ou mélange de pigments, la charge ou mélange de charges c), le cas échéant les additifs, auxiliaires ou adjuvants d), le cas échéant d'autres oligomères ou polymères, présents le cas échéant sous la forme d'une solution, dispersion ou émulsion aqueuse e) et le cas échéant, jusqu'à 20% en poids, sur base de la teneur totale en matière solide d'un solvant organique et/ou d'eau f) dans un appareil industriel approprié un composant, qui constitue 90,2 à 99,7% en poids du mastic suivant l'invention, avec la consistance nécessaire à un traitement pratique, et celui-ci est alors mélangé de manière homogène pour former le mastic suivant l'invention, directement avant le traitement, avec le deuxième composant, qui constitue 9,8 à 0,3% en poids du mastic suivant l'invention, à savoir au moins un réticulant polyisocyanate b).

5. Procédé de préparation de mastics aqueux réactifs suivant la revendication 1, **caractérisé en ce que** l'on prépare d'abord à partir d'au moins une dispersion de polyuréthanne-polyurée a) contenant des radicaux réagissant avec les isocyanate, avec le pigment ou mélange de pigments, la charge ou mélange de charges c), le cas échéant les additifs, auxiliaires ou adjuvants d), le cas échéant d'autres oligomères ou polymères, présents le cas échéant sous la forme d'une solution, dispersion ou émulsion aqueuse e) et le cas échéant, jusqu'à 10% en poids, sur base de la teneur totale en matière solide d'un solvant organique et/ou d'eau f) dans un appareil industriel approprié un composant, qui constitue 96 à 99,5% en poids du mastic suivant l'invention, avec la consistance nécessaire à un traitement pratique, et celui-ci est alors mélangé de manière homogène pour former le mastic suivant l'invention, directement avant le traitement, avec le deuxième composant, qui constitue 4 à 0,5% en poids du mastic suivant l'invention, à savoir au moins un réticulant de polyisocyanate b).

6. Procédé de préparation de mastics aqueux réactifs suivant la revendication 1, **caractérisé en ce que** l'on prépare d'abord à partir d'au moins une dispersion de polyuréthanne ou polyuréthanne-polyurée a) avec le pigment ou mélange de pigments, la charge ou mélange de charges c), le cas échéant les additifs, auxiliaires ou adjuvants d), le cas échéant d'autres oligomères ou polymères, présents le cas échéant sous la forme d'une solution, dispersion ou émulsion aqueuse e) et le cas échéant, jusqu'à 10% en poids, sur base de la teneur totale en matière solide d'un solvant organique et/ou d'eau f) et d'au moins un réticulant polyisocyanate b) le mastic suivant l'invention dans un appareil industriel approprié, directement avant le traitement du mastic, et celui-ci est alors mis en oeuvre, le cas échéant par addition d'eau et/ou d'un solvant organique en la consistance de traitement nécessaire.

7. Mastics aqueux réactifs suivant la revendication 1, **caractérisés par** une teneur en polyisocyanates b), rendus hydrophiles par allophanate, que l'on peut obtenir par réaction de polyéthers hydrophiles avec des polyisocyanates aliphatiques et/ou cycloaliphatiques avec mise en oeuvre de catalyseurs appropriés.

8. Mastics aqueux réactifs suivant la revendication 1, **caractérisés en ce qu'**un polyisocyanate d'hexaméthylènediisocyanate avec des unités structurelles iminooxadiazinedione est présent comme polyisocyanate b).

9. Mastics aqueux réactifs suivant la revendication 1, **caractérisés en ce que** le nonanetriisocyanate est présent comme polyisocyanate b).

10. Mastics aqueux réactifs suivant la revendication 1, **caractérisés en ce que** le composant c) consiste en maximum 10% en poids, sur base de la quantité totale de c), de pigments inorganiques, colorants.

11. Mastics aqueux réactifs suivant la revendication 2, **caractérisés en ce que** les composants a3) contenant des radicaux hydrophiles sont incorporés partiellement ou complètement dans le composant polyol a1) par des radicaux ester dans les dispersions de polyuréthanne ou polyuréthanne-polyurée.

12. Mastics aqueux réactifs suivant la revendication 1, **caractérisés en ce que** des polyisocyanates hydrophobes à faible viscosité à base d'hexaméthylènediisocyanate avec des unités structurelles isocyanurate, uretdione, allophanate et/ou uréthanne et/ou des polyisocyanates rendus hydrophiles par réaction avec des polyéthers hydrophiles, à base d'hexaméthylènediisocyanate, sont présents comme polyisocyanate b).

13. Mastics aqueux réactifs suivant la revendication 1, **caractérisés en ce que** des dispersions de polyuréthanne ou polyuréthanne-polyurée modifiées par des copolymères ou des polyacrylates sont présentes comme composant a).

14. Mastics aqueux réactifs suivant la revendication 1, **caractérisés en ce que** des dispersions de polyuréthanne ou polyuréthanne-polyurée, dont le poids moléculaire Mw s'élève à plus de 50 000, sont présentes comme composant a).

15. Mastics aqueux réactifs suivant la revendication 1, **caractérisés en ce que** des oligomères ou polymères époxyfonctionnels sont présents comme composant e).

16. Mastics aqueux réactifs suivant la revendication 1, **caractérisés en ce qu'**ils durcissent par utilisation des composants a) et b) stables à la lumière dans les conditions d'utilisation usuelles pour les mastics, en des mastics stables à la lumière, stables à la coloration et à la dégradation.

17. Mastics aqueux réactifs suivant la revendication 1, **caractérisés en ce qu'**ils contiennent moins de 5% en poids de substances organiques volatiles.

18. Utilisation des mastics aqueux réactifs suivant la revendication 1, pour le revêtement de bois, de substrats en bois et/ou de liège.

19. Utilisation des mastics aqueux réactifs suivant la revendication 1, pour le revêtement de substrats métalliques, de carrosseries de véhicules et/ou matières plastiques.

20. Utilisation des mastics aqueux réactifs suivant la revendication 1, pour le revêtement de marbre, granit ou substrats minéraux.

21. Utilisation des mastics aqueux réactifs suivant la revendication 1, pour la préparation de matières plastiques renforcées par des fibres de verre, structures surfaciques ou résines coulées renforcées par des fibres de verre.
